# EUROPEAN PATENT APPLICATION

(11) **EP 4 793 901 A1**
(43) Date of publication of application: **19.08.2026**
(21) Application number: 26157906.4
(22) Date of filing: 11.02.2026
(51) Int. Cl.: G06V 10/82, A63F 13/67

(54) **MACHINE CONTROLLED CAMERA SYSTEMS IN INTERACTIVE GAMES**

(30) Priority: 15.02.2025 US 202563759078 P; 16.01.2026 US 202619451252
(71) Applicant: Skydance Silicon Valley, LLC, Santa Monica, California 90404 (US)
(72) Inventor: ISAAK, Jeremy Luke, Santa Monica, 90404 (US); BEAK, Julian Anthony, Santa Monica, 90404 (US)
(74) Representative: Gevers Patents

(57) **Abstract**

Systems and methods described herein relate to fully controlled camera systems for interactive gaming environments that utilize machine learning to automate perspective changes. Rather than relying on manual player input or static volumes, embodiments establish a plurality of camera points within a scene. A neural network architecture, comprising an input layer, hidden layers, and an output layer, continuously evaluates these points by processing environmental and gameplay data. The system normalizes raw camera data, applies weights and activation functions through the hidden layers to extract features, and generates a probability value representing the suitability of each angle. When a calculated score for an alternative camera point exceeds that of the currently rendered view, often subject to a specific threshold, the system automatically executes a camera cut. This approach ensures the player is consistently presented with an improved viewpoint that enhances immersion while reducing the cognitive load associated with manual camera management.

## Description

### PRIORITY

This application claims the benefit of, and priority to U.S. Provisional Application, entitled "Machine Controlled Camera Systems In Interactive Games," filed on February 15, 2025 and having application serial number 63/759,078, the entirety of each of said application being incorporated herein by reference.

### FIELD

The present disclosure relates to interactive environments. More particularly, the present disclosure relates to utilizing one or more machine-learning methods to operate a fully controlled camera system within an interactive environment.

### BACKGROUND

In three-dimensional interactive environments, such as video games and simulations, the perspective from which a user views the scene is critical to both functionality and immersion. Traditionally, camera control has been delegated to the user, requiring them to manipulate the viewing angle simultaneously with the movement of their character. This often involves complex input schemes, such as dual-analog stick configurations, where one input controls movement and the other controls the camera. While this offers freedom, it imposes a significant cognitive load, often forcing players to constantly adjust their view to avoid obstructions or keep targets in sight, rather than focusing on the narrative or gameplay mechanics. This dual-tasking can result in a detached experience where the user acts more as a remote operator than a participant in the virtual world.

To address these challenges, some interactive applications have implemented automated camera systems designed to track the user's character or focus on specific points of interest without manual input. These conventional systems typically rely on rigid, predefined logical rules or static volumes placed within the environment by designers. For example, a system might be programmed to simply keep a character in the center of the screen or switch to a specific fixed angle when a character enters a designated room. While these rule-based systems reduce the need for manual control, they often lack the nuance and adaptability required to handle dynamic, emergent gameplay situations. They can struggle to frame complex scenes that involve multiple moving targets or unpredictable player actions, leading to jarring transitions, obstructed views, or visually unappealing compositions that break immersion.

Furthermore, as interactive environments become more detailed and complex, the number of variables influencing an optimal camera shot increases exponentially. These variables include lighting, object occlusion, character poses, and narrative context. Traditional algorithmic approaches often fail to effectively process this high-dimensional data in real-time to mimic the artistic decision-making of a human cinematographer.

### BRIEF DESCRIPTION OF DRAWINGS

The above, and other, aspects, features, and advantages of several embodiments of the present disclosure will be more apparent from the following description as presented in conjunction with the following several figures of the drawings.
FIG. 1 is a video game ecosystem in accordance with various embodiments of the disclosure;
FIG. 2 is a conceptual block diagram of a device suitable for configuration with a full control camera logic, in accordance with various embodiments of the disclosure;
FIG. 3 is an abstract block diagram of the components of a fully controlled camera system 300 in accordance with various embodiments of the disclosure;
FIG. 4 is an abstract block diagram of the data within a storage 318 of a fully controlled camera system in accordance with various embodiments of the disclosure;
FIG. 5 is a conceptual illustration of utilizing points of interest in a fully controlled camera system in accordance with various embodiments of the disclosure;
FIG. 6 is a conceptual illustration of utilizing character traits in a fully controlled camera system in accordance with various embodiments of the disclosure;
FIG. 7 is a conceptual illustration of virtual camera framing using cinematographic principles in accordance with various embodiments of the disclosure;
FIG. 8 is a conceptual illustration of a game environment with a plurality of available camera points in accordance with various embodiments of the disclosure;
FIG. 9 is a conceptual illustration of a virtual editor in a fully controlled camera system in accordance with various embodiments of the disclosure;
FIG. 10 is a flowchart of a process for evaluating preexisting camera scores in accordance with various embodiments of the disclosure;
FIG. 11 is a flowchart of a process for evaluating generated camera scores in accordance with various embodiments of the disclosure;
FIG. 12 is a flowchart of a process for generating a camera score in accordance with various embodiments of the disclosure;
FIG. 13 is a diagram depicting various subsets of artificial intelligence in accordance with various embodiments of the disclosure;
FIG. 14 depicts different methods of machine-based learning in accordance with various embodiments of the disclosure;
FIG. 15 depicts a machine learning lifecycle in accordance with various embodiments of the disclosure;
FIG. 16 is an exemplary neural network for use in a fully controlled camera system in accordance with various embodiments of the disclosure;
FIG. 17 is a flowchart of a process for machine-learning based camera scoring in accordance with various embodiments of the disclosure;
FIG. 18 is a flowchart of a process for a reinforcement learning feedback loop in accordance with various embodiments of the disclosure; and
FIG. 19 is a flowchart of a process for training a deep learning camera model in accordance with various embodiments of the disclosure.

Corresponding reference characters indicate corresponding components throughout the several figures of the drawings. Elements in the several figures are illustrated for simplicity and clarity and have not necessarily been drawn to scale. For example, the dimensions of some of the elements in the figures might be emphasized relative to other elements for facilitating understanding of the various presently disclosed embodiments. In addition, common, but well-understood, elements that are useful or necessary in a commercially feasible embodiment are often not depicted in order to facilitate a less obstructed view of these various embodiments of the present disclosure.

### DETAILED DESCRIPTION

In response to the limitations of manual camera control and rigid, rule-based automation in interactive environments, embodiments of the present disclosure introduce a fully controlled camera system that leverages machine learning to automate perspective changes. Traditional systems often require players to manage both character movement and camera angles simultaneously, creating a cognitive burden that can detract from immersion and gameplay. By utilizing a neural network-based architecture, the disclosed system processes real-time environmental and gameplay data to autonomously select the most optimal camera viewpoint. This approach replaces the need for continuous manual adjustment or static camera volumes, allowing the system to adapt dynamically to emergent situations. Consequently, the player is presented with a curated, cinematic visual experience that aligns with the narrative and action without requiring direct intervention.

The system operates by establishing a plurality of potential camera points within a given game environment, each representing a distinct perspective on the scene. Unlike conventional methods that might hard-code a specific camera for a specific location, the disclosed embodiments treat these points as candidates in a competitive selection process. A neural network continuously evaluates these candidates by processing a wide array of data inputs, including lens characteristics, occlusion status, player movement, and adherence to cinematographic principles like the rule of thirds. This evaluation generates a probability score for each camera point, reflecting its suitability for the current moment. When the score of an alternative camera significantly exceeds that of the active camera, often subject to a threshold to prevent jarring switches, the system executes a cut, seamlessly transitioning the view.

A useful component of this innovation is the use of deep learning models, such as convolutional or feedforward neural networks, to generate the camera scores. The input layer of the network receives raw data vectors describing the scene, which are then normalized and passed through hidden layers where complex features and relationships are extracted. Through the application of weights, biases, and non-linear activation functions, the network learns to identify subtle patterns that contribute to a high-quality shot, such as dramatic framing or clear visibility of a target. This allows the system to make sophisticated decisions that mimic the artistic intuition of a human director, prioritizing shots that enhance emotional impact or tactical awareness. The output layer then condenses this processing into a single actionable score that drives the cutting logic.

To ensure the system improves over time and adapts to player preferences, the disclosure also incorporates reinforcement learning and training loops. The model can be trained on historical gameplay data, learning from examples of successful camera work and player corrections. During runtime, a reinforcement learning agent may observe the outcome of its camera decisions, such as whether a player manually overrides a selected angle, and generate reward or penalty signals. These signals are used to update the model's internal weights, refining its policy to maximize future rewards. This feedback mechanism ensures that the camera system evolves, becoming more attuned to the specific needs of the game and the player's style.

Finally, the architecture includes specialized logic components, such as a virtual editor, virtual cinematographer, and virtual cameraman, which work in concert to execute the automated direction. The virtual editor manages the high-level decision of when to cut, ensuring pacing and continuity are maintained. The virtual cinematographer applies aesthetic rules to the selection process, ensuring that shots are not only functional but visually compelling. Meanwhile, the virtual cameraman simulates realistic camera behaviors, such as organic movement or reaction delays, to prevent the camera from feeling robotic or artificial. Together, these components create a cohesive system that transforms the role of the camera from a passive tool into an active, intelligent participant in the storytelling process.

Often, a feature vector can be understood as a numerical representation of an object or state within the game environment that facilitates processing by a machine learning model. In the context of a fully controlled camera system, raw data such as the player's three-dimensional coordinates, the type of weapon equipped, and the distance to the nearest enemy cannot be directly interpreted by a neural network in their native formats. A feature vector aggregates these disparate data points into a single, ordered list of numerical values, effectively translating the game state into a language the model can understand. This process often involves normalization, where values are scaled to a uniform range, ensuring that a large value like a coordinate position does not disproportionately influence the model compared to a smaller value like an occlusion flag.

Those skilled in the art will recognize that the composition of a feature vector is a critical step in the design of a robust camera control system. The vector serves as the input layer for the neural network, and its dimensionality is determined by the number of unique attributes being tracked. For example, a feature vector might consist of fifty floating-point numbers, where the first three represent the camera's position, the next four represent its rotational quaternion, and subsequent values represent environmental factors like lighting intensity or the presence of obstacles. By encapsulating this information into a standardized vector format, the system allows the neural network to identify patterns and correlations across different gameplay scenarios efficiently.

Those skilled in the art will recognize that a hidden layer can be understood as an intermediate layer of neurons within a neural network that is situated between the input layer and the output layer. These layers are responsible for performing the complex transformations and feature extractions that allow the model to learn non-linear relationships within the data. In a deep learning model used for camera scoring, multiple hidden layers are often stacked sequentially, with each subsequent layer processing the output of the previous one to identify increasingly abstract patterns. For instance, the first hidden layer might detect simple geometric relationships, such as the distance between the player and the camera, while a deeper hidden layer might combine these simple features to recognize complex concepts like "cinematic tension" or "action framing."

In various embodiments, each neuron within a hidden layer receives inputs from the neurons in the preceding layer, multiplies them by specific weight values, adds a bias term, and passes the result through an activation function. This architecture allows the hidden layers to act as a series of filters that refine the raw input data into a set of transformed features that are relevant for the final prediction. The number of hidden layers and the number of neurons within each layer are architectural hyperparameters that determine the model's capacity to learn. A network with too few hidden layers might fail to capture the nuances of a complex game environment, while one with too many might become computationally expensive to run in real-time alongside the game engine.

Often, an activation function can be understood as a mathematical equation that determines the output of a neural network node given an input or set of inputs. This function is crucial because it introduces non-linearity into the network, allowing the model to learn and represent complex data patterns that are not simply linear combinations of the inputs. Without activation functions, a neural network, regardless of how many layers it has, would behave like a single-layer linear regression model, severely limiting its ability to handle the dynamic and unpredictable nature of a 3D game environment. Common activation functions include the Rectified Linear Unit (ReLU), which allows the network to activate only certain neurons, and the sigmoid function, which squashes outputs into a probability-like range between zero and one.

In the context of the camera scoring logic described herein, activation functions are applied after the weighted sum of inputs and biases is calculated at each neuron. For example, in the output layer of the camera scoring model, a sigmoid or SoftMax activation function might be used to convert the raw numerical output of the network into a normalized probability score representing the suitability of a camera angle. This ensures that the final camera score is a digestible metric that can be easily compared against thresholds or other camera scores by the virtual editor logic. Furthermore, the choice of activation function in the hidden layers can significantly impact the training speed and stability of the model, influencing how quickly the system can learn to frame shots effectively.

Those skilled in the art will recognize that backpropagation can be understood as a supervised learning algorithm used for training artificial neural networks. It is the primary mechanism by which the model learns from its mistakes, calculating the gradient of the loss function with respect to each weight in the network. When the camera system is in a training phase, it generates a prediction for a camera angle and compares it to a "ground truth" or ideal outcome derived from historical data or expert demonstrations. The difference between the prediction and the ideal outcome is quantified as a loss value, and backpropagation propagates this error backward from the output layer through the hidden layers to the input layer.

By determining how much each individual weight contributed to the total error, backpropagation allows the system to adjust the weights in a direction that minimizes the loss. This process is typically repeated over thousands or millions of training examples, gradually refining the network's internal parameters until it can accurately predict optimal camera angles for a wide variety of gameplay situations. In various embodiments, this error correction process is coupled with an optimization algorithm, such as stochastic gradient descent, to efficiently update the weights. Backpropagation ensures that the neural network evolves from a state of random initialization to a highly tuned system capable of mimicking the aesthetic choices of a human cinematographer.

Often, a reinforcement learning policy can be understood as a strategy or mapping that defines the behavior of an agent in a given environment. In the context of the fully controlled camera system, the policy determines which action the virtual camera agent should take, such as cutting to a specific angle, panning, or zooming, based on the current observed state of the game. The policy can be deterministic, where a specific state always maps to the same action, or stochastic, where the policy outputs a probability distribution over a set of possible actions. The goal of the reinforcement learning process is to learn an optimal policy that maximizes the cumulative reward over time, ensuring that the camera consistently provides the best possible view for the player.

In many embodiments, the policy is represented and stored within the weights of a neural network, often referred to as a policy network. As the agent interacts with the game environment, it receives feedback in the form of reward or penalty signals, which indicate whether the actions taken were beneficial or detrimental to the user experience. This feedback is used to update the policy, reinforcing actions that lead to positive outcomes and discouraging those that lead to negative ones. For example, if a policy dictates a camera cut that causes the player to immediately manually reset the view, the system interprets this as a penalty and adjusts the policy to make that specific cut less likely in similar future states. Over time, this allows the policy to adapt to the player's specific preferences and playstyle.

Often, embodiments of the disclosure described herein can utilize an innovative fully controlled camera system in a game where the camera automatically switches between different angles during gameplay, unlike traditional games where players manually control the camera. This system can leverage various cinematographic principles to make these cuts occur and are perceived seamlessly, enhancing the cinematic quality of the game and maintaining immersion. In many embodiments, a goal is to create a gameplay experience that looks and feels like a movie, with dynamic camera angles and transitions that respond to the action in real-time.

In various embodiments, the fully controlled camera systems described herein can be processed, operated, or otherwise controlled by one or more machine-learning methods. As described in more detail below, a plurality of virtual cameras can be placed or otherwise configured within a scene within an interactive game. These virtual cameras can have a plurality of attributes. Each virtual camera can be associated with a camera score that represents an overall fitness or acceptability of the scene captured by each virtual camera. Based on predetermined thresholds, the scene of the interactive game can be automatically cut between virtual cameras based on the overall camera scores. One or more machine-learning processes can be utilized to generate these scores, determine placements of potential virtual cameras, and/or evaluating if a camera cut should occur, etc.

In traditional games a single orbiting camera is often used that players can control, but embodiments described herein can integrate various heuristics and other processes to manage camera angles automatically, adhering to rules of cinema such as the 180-degree rule, avoiding jump cuts, and framing shots effectively. This approach can allow the game to maintain a cinematic feel even during intense combat scenes, making the gameplay look like a polished action movie.

The fully controlled camera system can be configured to keep players oriented and engaged by using screen-relative controls, meaning the direction the player moves is always consistent with what they see on screen, regardless of camera angle changes. This can reduce the learning curve and disorientation for players, allowing them to focus on the action rather than camera management. In many embodiments, an aim is to perfect the fully controlled camera system to the point where manual camera control is unnecessary, providing a seamless and intuitive experience that aligns with narrative and gameplay needs.

Various embodiments described herein can facilitate these automatic camera cuts by scoring a plurality of cameras associated with various camera points in different gaming environments. For example, as the player moves throughout the game world, they encounter different environments, levels, or other areas. Each of these locations can be configured with various camera points that may be static in the scene or dynamically located such as over-the-shoulder shots. Each camera that may be selected to cut to in a game scene can have a score associated with it. These scores can be utilized to compare and select which camera should be next when a cut point event is encountered. As described in more detail below, each camera point can have a variety of data associated with it that can color the way the score is weighted and/or otherwise evaluated. As camera scores cross a given threshold, the fully controlled camera system can initiate a cut to that camera within the scene.

Aspects of the present disclosure may be embodied as an apparatus, system, method, or computer program product. Accordingly, aspects of the present disclosure may take the form of an entirely hardware embodiment, an entirely software embodiment (including firmware, resident software, micro-code, or the like) or an embodiment combining software and hardware aspects that may all generally be referred to herein as a "function," "module," "apparatus," or "system.". Furthermore, aspects of the present disclosure may take the form of a computer program product embodied in one or more non-transitory computer-readable storage media storing computer-readable and/or executable program code. Many of the functional units described in this specification have been labeled as functions, in order to emphasize their implementation independence more particularly. For example, a function may be implemented as a hardware circuit comprising custom VLSI circuits or gate arrays, off-the-shelf semiconductors such as logic chips, transistors, or other discrete components. A function may also be implemented in programmable hardware devices such as via field programmable gate arrays, programmable array logic, programmable logic devices, or the like.

Functions may also be implemented at least partially in software for execution by various types of processors. An identified function of executable code may, for instance, comprise one or more physical or logical blocks of computer instructions that may, for instance, be organized as an object, procedure, or function. Nevertheless, the executables of an identified function need not be physically located together but may comprise disparate instructions stored in different locations which, when joined logically together, comprise the function and achieve the stated purpose for the function.

Indeed, a function of executable code may include a single instruction, or many instructions, and may even be distributed over several different code segments, among different programs, across several storage devices, or the like. Where a function or portions of a function are implemented in software, the software portions may be stored on one or more computer-readable and/or executable storage media. Any combination of one or more computer-readable storage media may be utilized. A computer-readable storage medium may include, for example, but not limited to, an electronic, magnetic, optical, electromagnetic, infrared, or semiconductor system, apparatus, or device, or any suitable combination of the foregoing, but would not include propagating signals. In the context of this document, a computer readable and/or executable storage medium may be any tangible and/or non-transitory medium that may contain or store a program for use by or in connection with an instruction execution system, apparatus, processor, or device.

Computer program code for carrying out operations for aspects of the present disclosure may be written in any combination of one or more programming languages, including an object-oriented programming language such as Python, Java, Smalltalk, C++, C#, Objective C, or the like, conventional procedural programming languages, such as the "C" programming language, scripting programming languages, and/or other similar programming languages. The program code may execute partly or entirely on one or more of a user's computer and/or on a remote computer or server over a data network or the like.

A component, as used herein, comprises a tangible, physical, non-transitory device. For example, a component may be implemented as a hardware logic circuit comprising custom VLSI circuits, gate arrays, or other integrated circuits; off-the-shelf semiconductors such as logic chips, transistors, or other discrete devices; and/or other mechanical or electrical devices. A component may also be implemented in programmable hardware devices such as field programmable gate arrays, programmable array logic, programmable logic devices, or the like. A component may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in certain embodiments, may alternatively be embodied by or implemented as a component.

A circuit, as used herein, comprises a set of one or more electrical and/or electronic components providing one or more pathways for electrical current. In certain embodiments, a circuit may include a return pathway for electrical current, so that the circuit is a closed loop. In another embodiment, however, a set of components that does not include a return pathway for electrical current may be referred to as a circuit (e.g., an open loop). For example, an integrated circuit may be referred to as a circuit regardless of whether the integrated circuit is coupled to ground (as a return pathway for electrical current) or not. In various embodiments, a circuit may include a portion of an integrated circuit, an integrated circuit, a set of integrated circuits, a set of non-integrated electrical and/or electrical components with or without integrated circuit devices, or the like. In one embodiment, a circuit may include custom VLSI circuits, gate arrays, logic circuits, or other integrated circuits; off-the-shelf semiconductors such as logic chips, transistors, or other discrete devices; and/or other mechanical or electrical devices. A circuit may also be implemented as a synthesized circuit in a programmable hardware device such as field programmable gate array, programmable array logic, programmable logic device, or the like (e.g., as firmware, a netlist, or the like). A circuit may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in certain embodiments, may be embodied by or implemented as a circuit.

Reference throughout this specification to "one embodiment," "an embodiment," or similar language means that a particular feature, structure, or characteristic described in connection with the embodiment is included in at least one embodiment of the present disclosure. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to", unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise.

Further, as used herein, reference to reading, writing, storing, buffering, and/or transferring data can include the entirety of the data, a portion of the data, a set of the data, and/or a subset of the data. Likewise, reference to reading, writing, storing, buffering, and/or transferring non-host data can include the entirety of the non-host data, a portion of the non-host data, a set of the non-host data, and/or a subset of the non-host data.

Lastly, the terms "or" and "and/or" as used herein are to be interpreted as inclusive or meaning any one or any combination. Therefore, "A, B or C" or "A, B and/or C" mean "any of the following: A; B; C; A and B; A and C; B and C; A, B and C.". An exception to this definition will occur only when a combination of elements, functions, steps, or acts are in some way inherently mutually exclusive.

Aspects of the present disclosure are described below with reference to schematic flowchart diagrams and/ or schematic block diagrams of methods, apparatuses, systems, and computer program products according to embodiments of the disclosure. It will be understood that each block of the schematic flowchart diagrams and/or schematic block diagrams, and combinations of blocks in the schematic flowchart diagrams and/or schematic block diagrams, can be implemented by computer program instructions. These computer program instructions may be provided to a processor of a computer or other programmable data processing apparatus to produce a machine, such that the instructions, which execute via the processor or other programmable data processing apparatus, create means for implementing the functions and/or acts specified in the schematic flowchart diagrams and/or schematic block diagrams block or blocks.

It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated figures. Although various arrow types and line types may be employed in the flowchart and/or block diagrams, they are understood not to limit the scope of the corresponding embodiments. For instance, an arrow may indicate a waiting or monitoring period of unspecified duration between enumerated steps of the depicted embodiment.

In the following detailed description, reference is made to the accompanying drawings, which form a part thereof. The foregoing summary is illustrative only and is not intended to be in any way limiting. In addition to the illustrative aspects, embodiments, and features described above, further aspects, embodiments, and features will become apparent by reference to the drawings and the following detailed description. The description of elements in each figure may refer to elements of proceeding figures. Like numbers may refer to like elements in the figures, including alternate embodiments of like elements.

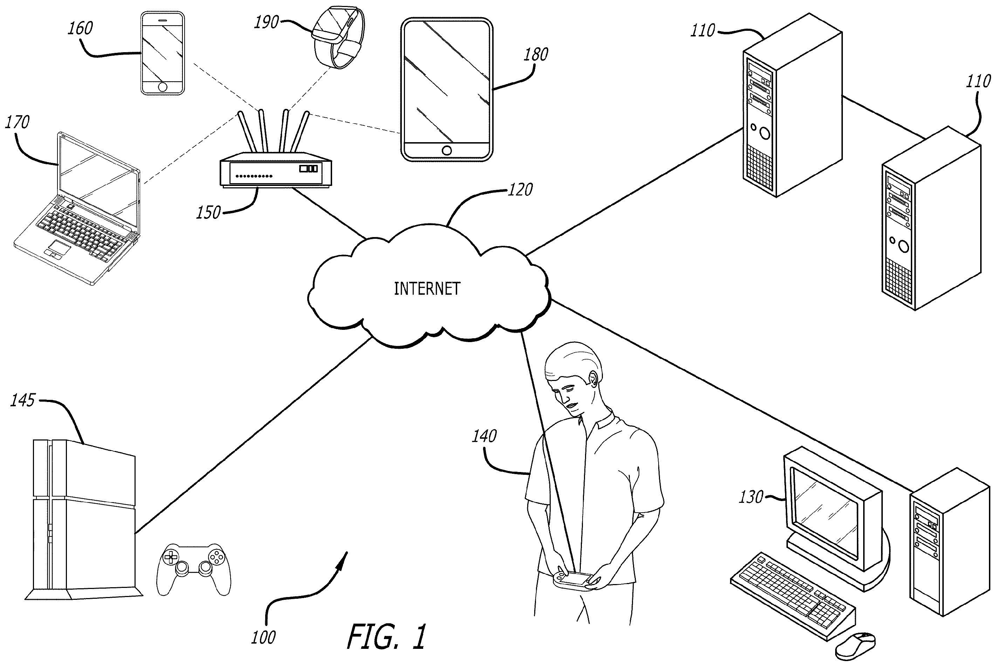

Referring to FIG. 1, a video game ecosystem 100 in accordance with various embodiments of the disclosure is shown. In many embodiments, the game can be designed to seamlessly integrate and function across various devices, including servers 110, home gaming consoles 145, mobile gaming consoles 140, laptops 170, personal computers 130, tablets 180, smartphones 160, wearable devices 190, and more. This integration can ensure a consistent and optimized gaming experience, regardless of the device being used.

In some embodiments, the game can be developed using a modular architecture, enabling compatibility and scalability across multiple platforms. The core game logic, assets, and the camera system may be abstracted into platform-agnostic modules. These modules can be encapsulated in a game engine designed to handle platform-specific requirements dynamically. As those skilled in the art will recognize, certain embodiments, such as games that require a client/server relationship may require one or more aspects of the game to be processed server-side in one or more of the servers 110.

In a number of embodiments, distribution of the game across the various platforms may leverage cloud-based infrastructure, enabling seamless delivery of game content to end-users. Upon release, the game can be hosted on central servers 110 equipped with, or working in conjunction with, content delivery networks (CDNs) to minimize latency and ensure quick access. Players may download the game client tailored to their specific device. For home gaming consoles and personal computers, distribution can be through established digital storefronts, such as the PlayStation Network, Xbox Live, Steam, and others. Mobile and tablet versions may be available via app stores like Google Play and Apple's App Store. Additionally, wearable devices and newer platforms can access the game through dedicated portals or companion apps.

In various embodiments, upon installation, the game may communicate with central servers 110 to authenticate users, sync progress, and manage in-game assets. In some embodiments, for instance, on higher-performance home gaming consoles 145 and PCs 130, the game may provide high-resolution, dynamic range views with advanced effects like depth of field and motion blur. On mobile devices and tablets, the camera system can optimize for performance, ensuring smooth gameplay while maintaining visual fidelity.

Certain embodiments of the ecosystem 100 may allow for cross-platform play, allowing users to interact and play together regardless of the device they are using. This architecture can support this by maintaining a unified player database and real-time synchronization of game states. In various embodiments, the camera system can adjust its parameters, scores, or views based on the device in use or the current state of other players within the online game, ensuring a consistent gameplay experience.

In more embodiments, updates can be distributed through the same channels as the original game, ensuring that all devices receive the latest features, bug fixes, and improvements simultaneously. The fully controlled camera system and any associated logic, being a part of the gameplay experience, may also receive regular updates and telemetry data to enhance functionality and performance based on user feedback and advancements in technology.

In additional embodiments, the ecosystem 100 can include one or more servers 110 that can play a role in ensuring smooth operation, synchronization, and management of the game across various devices. The server 110 can be configured to handle various operations such as, but not limited to, user authentication, ensuring that only legitimate users can access the game. This process may involve verifying login credentials and managing user sessions. Additionally, the server 110 can manage authorization, determining what resources and features each user is permitted to access based on their account type and progress within the game.

In further embodiments, the server 110 can maintain the game's overall state, ensuring consistency and synchronization across all connected devices. This may involve tracking player progress, in-game events, and real-time interactions. For multiplayer scenarios, the server 110 can ensure that all players experience the same game state, coordinating actions and updates to maintain a seamless multiplayer experience.

In still more embodiments, servers 110 can be responsible for delivering game content, including initial game files, updates, patches, and downloadable content (DLC). They may utilize content delivery networks (CDNs) to distribute these files efficiently, reducing latency and ensuring that players can quickly access and download necessary game data. In multiplayer games, the server 110 can manage matchmaking, pairing players based on their skill levels, preferences, and other criteria. Once matched, the server 110 may establish and manage game sessions, ensuring that players are connected to the appropriate game instances and maintaining the integrity of these sessions.

The server 110 may also be configured to store and manages all necessary game data, including user profiles, game progress, leaderboards, and in-game statistics. This data can be stored in secure databases and accessed and updated as needed to reflect players' actions and achievements within the game. To maintain a fair gaming environment, various embodiments of the server 110 can implement security measures and anti-cheat systems. These measures can be configured to detect and prevent unauthorized modifications, hacks, or exploits that could disrupt the game's balance or give certain players unfair advantages.

Servers 110 can also collect and analyze data related to game performance, user behavior, and system health. This information may be used to monitor the game's performance, identify and address issues, and inform future updates and improvements. Analytics can also help in understanding player engagement and preferences, guiding the development of new features and content. In yet additional embodiments, the server 110 can facilitate social features, such as friend lists, messaging, and in-game communities. It can sometimes manage interactions between players, supports communication channels, and ensures that social features are integrated seamlessly into the gaming experience. To handle varying numbers of concurrent players, the server 110 can be designed to have a scalable infrastructure. This may include utilizing load balancing techniques to distribute the workload evenly across multiple servers, ensuring consistent performance and preventing any single server from becoming a bottleneck.

In many embodiments, the ecosystem 100 may utilize the internet 120 and wireless network devices like routers 150 to efficiently deliver data across various devices, ensuring seamless connectivity and gameplay. For wireless devices, such as mobile gaming consoles 140, tablets 180, and wearable devices 190, the router 150 can provide Wi-Fi connectivity. Modern routers support high-speed wireless standards like Wi-Fi 6, which offer faster data rates, lower latency, and improved handling of multiple devices simultaneously. This can ensure a stable and efficient connection for gaming, even in households with numerous connected devices.

As the game operates, data packets are transmitted between the player's device and the servers 110. These packets may include user inputs, game state updates, and synchronization data. The router 150 can handle the routing of these packets, directing them to their destination through the internet. Advanced Quality of Service (QoS) settings on routers can prioritize gaming traffic to ensure minimal latency and reduced lag, enhancing the gaming experience. During multiplayer sessions, the router 150 can play a role in maintaining a stable connection. It manages data traffic between multiple players, ensuring that game state updates and player interactions are synchronized in real-time. The ecosystem 100 can also be configured to utilize peer-to-peer (P2P) networking in conjunction with traditional client-server models. In P2P setups, game data may be shared directly between players' devices, reducing the load on central servers and improving data transfer speeds. The router 150 can, in certain embodiments, facilitate these direct connections, ensuring that data packets are correctly routed between peers.

In a number of embodiments, a PC 130 can download the game/game client from a digital storefront from one or more servers 110. Once installed, the game client can connect to the game's servers 110 via the internet 120, authenticating the user and syncing their game data. In certain embodiments, the PC 130 can also interact with other devices in the ecosystem 100. For example, a player might use a mobile app on their tablet 180 or smartphone 160 to manage their game inventory or chat with friends while playing on their PC 130. These interactions can be facilitated by one or more servers 110, which can synchronize data across all connected devices, ensuring a unified and cohesive gaming experience.

As those skilled in the art will recognize, home gaming consoles 145 are often specifically designed for gaming, providing a consistent and optimized experience without the need for extensive configuration. In various embodiments, home gaming consoles 145 frequently include social and community features that are tightly integrated into the ecosystem 100. Players can easily add friends, join parties, and communicate through voice or text chat. Additionally, game content distribution on home gaming consoles 145 often involves digital storefronts. In additional embodiments, consoles are designed to work seamlessly with various peripherals and accessories, such as controllers, headsets, and virtual reality (VR) devices.

In further embodiments, a mobile gaming console 140 has a design emphasizing portability, featuring a compact form factor, built-in display, and rechargeable battery. This allows players to continue their gaming sessions seamlessly when moving between different locations. In various embodiments, the game client and associated game logic on the mobile gaming console is optimized to handle the specific hardware and connectivity characteristics of these devices, ensuring smooth performance and efficient battery usage.

The mobile gaming console 140 can also connect to other devices through companion apps or cloud gaming services. For example, a player might use a mobile app on their console 140 to manage in-game items or communicate with friends, synchronizing this data with their main game profile on the servers 110. In certain embodiments, cloud gaming services can allow the mobile gaming console 140 to stream games from powerful servers 110, bypassing the need for high-end local hardware and ensuring access to graphically intensive games that would otherwise be beyond the device's capabilities.

Furthermore, mobile gaming consoles 140 can often support local multiplayer gaming through ad-hoc networks or Bluetooth connections. This may allow players to connect directly with other nearby mobile gaming consoles 140 for shared gaming experiences without relying solely on the internet. The servers 110 can then sync any local multiplayer progress with the broader ecosystem 100 once the devices reconnect to the internet 120.

Unlike stationary PCs 130, laptops 170, can be used in various environments, from home to public spaces. Many gaming laptops 170 come with dedicated GPUs, allowing for high-quality graphics and smooth gameplay. Laptops 170 may also support various peripheral connections, including external displays, gaming controllers, and VR headsets, expanding their gaming capabilities.

In more embodiments, smartphones 160 can offer unique features like GPS, accelerometers, gyroscopes, and cameras, which can be integrated into gameplay to provide augmented reality (AR) experiences and location-based gaming. Touchscreens are often standard on smartphones 160, facilitating intuitive controls and gestures. The ubiquity of smartphones 160 can ensure that players can engage with the game ecosystem wherever they are, and mobile-specific features like notifications keep players connected to in-game events and updates. Additionally, smartphones 160 may often include biometric security features such as fingerprint scanners and facial recognition, enhancing secure access to game accounts and in-game purchases.

In numerous embodiments, wearable devices 190, such as, but not limited to, smartwatches and AR glasses, can add a layer of interaction that extends beyond traditional gaming platforms. These devices can provide real-time notifications, health tracking, and context-sensitive interactions based on the player's environment. For example, a smartwatch might track physical activity during a fitness game, providing feedback and integrating physical activity into the gaming experience. In another example, AR glasses can overlay game elements onto the real world, creating immersive and interactive experiences that blend reality with the virtual game environment. Wearable devices 190 may also enable continuous engagement with the ecosystem 100 through haptic feedback and voice commands, allowing players to interact without needing to look at a screen.

In still more embodiments, tablets 180 can offer a larger screen size than smartphones while maintaining portability, making them ideal for immersive gameplay on the go. Tablets 180 may be configured to support both touch and stylus input, providing precise control options for games that require fine-tuned interactions. They may also be excellent for split-screen or multi-window functionality, enabling players to run multiple apps simultaneously, such as a game and a companion app. Tablets 180 can easily connect to external peripherals like keyboards and game controllers, bridging the gap between mobile and traditional gaming setups.

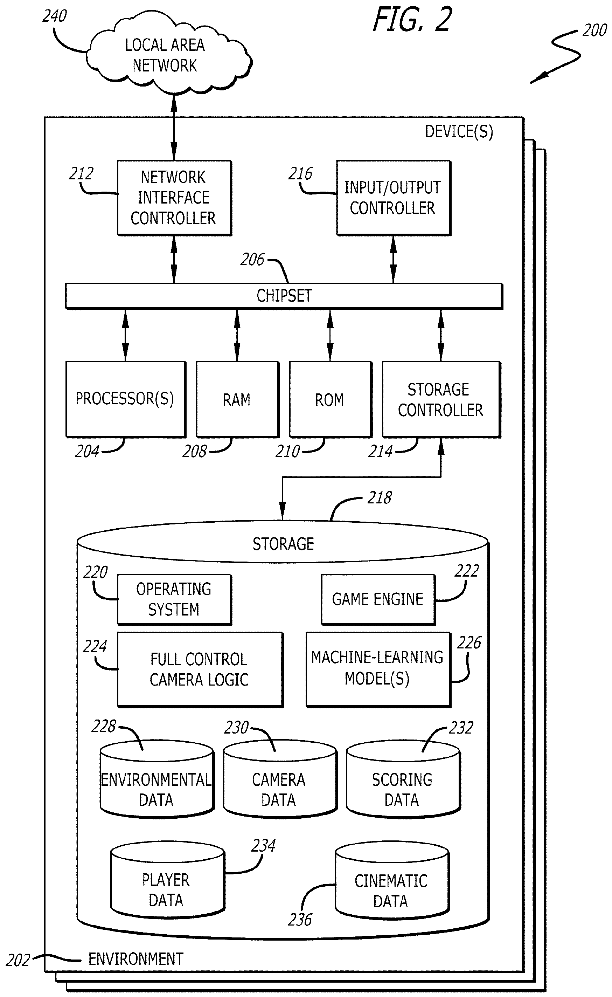

Although a specific embodiment for a video game ecosystem 100 is described above with respect to FIG. 1, any of a variety of systems and/or processes may be utilized in accordance with embodiments of the disclosure. For example, the video game ecosystem 100 may be configured into any number of various network topologies including different types of interconnected devices and user devices. The elements depicted in FIG. 1 may also be interchangeable with other elements of FIGS. 2-19 as required to realize a particularly desired embodiment.

Referring to FIG. 2, a conceptual block diagram of a device 200 suitable for configuration with a full control camera logic 224, in accordance with various embodiments of the disclosure is shown. The embodiment of the conceptual block diagram depicted in FIG. 2 can illustrate a conventional game device, personal computer, mobile game device, game server, laptop, tablet, network appliance, e-reader, smartphone, wearable device, or other computing device, and can be utilized to execute any of the application and/or logic components presented herein. The device 200 may, in many non-limiting examples, correspond to physical devices or to virtual resources described herein.

In many embodiments, the device 200 may include an environment 202 such as a baseboard or "motherboard," in physical embodiments that can be configured as a printed circuit board with a multitude of components or devices connected by way of a system bus or other electrical communication paths. Conceptually, in virtualized embodiments, the environment 202 may be a virtual environment that encompasses and executes the remaining components and resources of the device 200. In more embodiments, one or more processors 204, such as, but not limited to, central processing units ("CPUs") can be configured to operate in conjunction with a chipset 206. The processor(s) 204 can be standard programmable CPUs that perform arithmetic and logical operations necessary for the operation of the device 200.

In a number of embodiments, the processor(s) 204 can perform one or more operations by transitioning from one discrete, physical state to the next through the manipulation of switching elements that differentiate between and change these states. Switching elements generally include electronic circuits that maintain one of two binary states, such as flip-flops, and electronic circuits that provide an output state based on the logical combination of the states of one or more other switching elements, such as logic gates. These basic switching elements can be combined to create more complex logic circuits, including registers, adders-subtractors, arithmetic logic units, floating-point units, and the like.

In various embodiments, the chipset 206 may provide an interface between the processor(s) 204 and the remainder of the components and devices within the environment 202. The device 200 can incorporate different types of processors to enhance performance and efficiency across various tasks. A central processing unit (CPU) can handle primary processing tasks such as game logic, AI, and player inputs, while a graphics processing unit (GPU) can be specialized for rendering high-resolution graphics and visual effects. Digital signal processors (DSPs) may manage audio processing, delivering high-quality sound without burdening the CPU. In portable devices, systems on a chip (SoCs) can be configured to integrate the CPU, GPU, memory, and peripherals to balance performance and efficiency. In some embodiments, application-specific integrated circuits (ASICs) can optimize specific functions like cryptographic processing, while neural processing units (NPUs) accelerate AI and machine learning tasks. Some high-end devices may also include physics processing units (PPUs) to handle complex physics calculations, further enhancing the realism and responsiveness of the gaming experience. However, those skilled in the art will recognize that the device 200 can any variety or combination of processor(s) 204 as needed to satisfy the desired application.

The chipset 206 can provide an interface to a random-access memory ("RAM") 208, which can be used as the main memory in the device 200 in some embodiments. The chipset 206 can further be configured to provide an interface to a computer-readable storage medium such as a read-only memory ("ROM") 210 or non-volatile RAM ("NVRAM") for storing basic routines that can help with various tasks such as, but not limited to, starting up the device 200 and/or transferring information between the various components and devices. The ROM 210 or NVRAM can also store other application components necessary for the operation of the device 200 in accordance with various embodiments described herein.

Additional embodiments of the device 200 can be configured to operate in a networked environment using logical connections to remote computing devices and computer systems through a network, such as the local area network 240. The chipset 206 can include functionality for providing network connectivity through a network interface controller ("NIC") 212, which may comprise a gigabit Ethernet adapter or similar component. The NIC 212 can be capable of connecting the device 200 to other devices over the local area network 240. It is contemplated that multiple NICs 212 may be present in the device 200, connecting the device to other types of networks and remote systems, such as the Internet.

In further embodiments, the device 200 can be connected to a storage 218 that provides non-volatile storage for data accessible by the device 200. The storage 218 can, for instance, store an operating system 220, and/or game engine 222. In various embodiments, the storage 218 can be connected to the environment 202 through a storage controller 214 connected to the chipset 206. In certain embodiments, the storage 218 can consist of one or more physical storage units. The storage controller 214 can interface with the physical storage units through a serial attached SCSI ("SAS") interface, a serial advanced technology attachment ("SATA") interface, a fiber channel ("FC") interface, or other type of interface for physically connecting and transferring data between computers and physical storage units.

In additional embodiments, the device 200 can store data within the storage 218 by transforming the physical state of the physical storage units to reflect the information being stored. The specific transformation of physical state can depend on various factors. Examples of such factors can include, but are not limited to, the technology used to implement the physical storage units, whether the storage 218 is characterized as primary or secondary storage, and the like.

In many more embodiments, the device 200 can store information within the storage 218 by issuing instructions through the storage controller 214 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit, or the like. Other transformations of physical media are possible without departing from the scope and spirit of the present description, with the foregoing examples provided only to facilitate this description. In some embodiments, the device 200 can further read or access information from the storage 218 by detecting the physical states or characteristics of one or more particular locations within the physical storage units.

In addition to the storage 218 described above, certain embodiments of the device 200 may also have access to other computer-readable storage media to store and retrieve information, such as program modules, data structures, or other data. It should be appreciated by those skilled in the art that computer-readable storage media is any available media that provides for the non-transitory storage of data and that can be accessed by the device 200. In some examples, operations performed by a cloud computing network, and or any components included therein, may be supported by one or more devices similar to device 200. Stated otherwise, some or all of the operations performed by the cloud computing network, and or any components included therein, may be performed by one or more devices 200 operating in a cloud-based arrangement.

By way of example, and not limitation, computer-readable storage media can include volatile and non-volatile, removable and non-removable media implemented in any method or technology. Computer-readable storage media includes, but is not limited to, RAM, ROM, erasable programmable ROM ("EPROM"), electrically-erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage or other magnetic storage devices, or any other medium that can be used to store the desired information in a non-transitory fashion.

As mentioned briefly above, the storage 218 can store an operating system 220 utilized to control the operation of the device 200. According to one embodiment, the operating system comprises the LINUX operating system. According to another embodiment, the operating system comprises the WINDOWS^{®} SERVER operating system from MICROSOFT Corporation of Redmond, Washington. According to further embodiments, the operating system can comprise the UNIX operating system or one of its variants. It should be appreciated that other operating systems can also be utilized. The storage 218 can store other system or application programs and data utilized by the device 200.

In many additional embodiments, the storage 218 or other computer-readable storage media is encoded with computer-executable instructions which, when loaded into the device 200, may transform it from a general-purpose computing system into a special-purpose computer capable of implementing the embodiments described herein. These computer-executable instructions may be stored as application and transform the device 200 by specifying how the processor(s) 204 can transition between states, as described above. In some embodiments, the device 200 has access to computer-readable storage media storing computer-executable instructions which, when executed by the device 200, perform the various processes described above with regard to FIGS. 1 and 3-19. In certain embodiments, the device 200 can also include computer-readable storage media having instructions stored thereupon for performing any of the other computer-implemented operations described herein.

In a number of embodiments, the device 200 can store a game engine 222 in storage 218 and load it when the game is launched, enabling quick access and execution. The game engine 222 can manage core tasks such as rendering graphics, processing inputs, handling physics calculations, and managing audio by leveraging the device's CPU, GPU, and other hardware components. It can abstract hardware complexities to ensure smooth gameplay and real-time interaction. Additionally, in various embodiments, the game engine 222 cam facilitate network communications for multiplayer interactions and supports cross-platform functionality, allowing games to run efficiently on various devices within the available game ecosystem.

In many further embodiments, the device 200 may include a full control camera logic 224. The full control camera logic 224 can be configured to perform one or more of the various steps, processes, operations, and/or other methods that are described above. Often, the full control camera logic 224 can be a set of instructions stored within a non-volatile memory that, when executed by the processor(s)/controller(s) 204 can carry out these steps, etc. In some embodiments, the full control camera logic 224 may be a client application that resides on a network-connected device, such as, but not limited to, a server, switch, personal or mobile computing device in a single or distributed arrangement.

In some embodiments, environmental data 228 can comprise various sub-data types point of interest data, environmental dimension data, play area data, and/or camera location data. In various embodiments, point of interest data can be utilized to highlight key objects or characters that the camera should focus on, ensuring that important elements are always in view. Environmental dimension data may provide the spatial parameters of the game environment that is being evaluated and/or rendered, allowing the camera to navigate and position itself accurately within that three-dimensional space. Play area data can be configured to define the boundaries and active regions where the player can move and/or gameplay can occur, helping the camera maintain optimal angles. Camera location data may include information about the current and potential positions of the camera, enabling dynamic adjustments to provide the best perspectives and avoid obstacles.

In more embodiments, camera data 230 may be utilized by a fully controlled camera system to facilitate the automatic management of camera movements for enhancement of the player's experience without requiring manual input. In some embodiments, the camera data 230 may comprise lens data for capturing information about focal length, aperture, depth of field, and the like, suitable for simulating real-world camera effects. Movement data can track and capture the camera's position and motion through the game environment. Base score data can include a base line score that each camera starts from when calculating a score for virtual editing. Framing data can ensures that key elements and characters are appropriately centered and visible within the frame. Camera type data may be configured to define the specific camera model or style being simulated, such as a handheld, Steadicam, cinematic, camcorder, drone camera, etc. Cameraman data can simulate or describe any human-operated camera movements, noise, or attributes to simulate a human camera operator, adding a layer of realism by mimicking how a person would handle the camera. Finally, camera weight data can account for the physical characteristics of the camera, influencing its inertia and how it responds to movements, contributing to a more authentic visual experience.

In further embodiments, scoring data 232 can include various sub-types of data including, but not limited to framing score data, player preference data, and update data. Framing score data can include various weights and items that can be utilized when generating a score for an associated camera point within a game environment. In some embodiments, player preference data can include data associated with one or more known player preferences, which can be captured from previous or historical gameplay, or "hints" provided to the game system, such as controller interactions. Finally, update data may provide one or more modifications to the weights utilized in one or more cameras or camera points when generating a score. For example, a certain camera within a game environment may never be selected due to the initial configuration of weights. Update data may allow for the modification of those weights such that the camera becomes a viable option for automatic cutting.

In various embodiments, player data 234 can comprise player type data as player movement data, among others. Player type data can be configured to describe one or more attributes related to the player and their current avatar or move set. For example, a player may have either a short-range attack or a long-range attack, which can be captured within the player type data. Similarly, play movement data may allow for the capture of characteristics to how the player may be able to move within a given game environment (running, walking, jumping abilities, etc.).

In still more embodiments, cinematic data 236 can include various heuristic data and telemetry data. As described in more detail below, heuristic data can include one or more heuristics associated with various cinematography or photography practices. In some embodiments, the heuristic data can be manually fine-tuned for a specifically desired game experience. However, as games are released and played by various players, telemetry data may be generated that gathers and otherwise transmits data related to various playthroughs done by players. In this way, the telemetry data can be used to update the game as desired by the game designers. For example, the telemetry data may indicate that players largely miss finding a particular hidden item in a gaming environment because a certain camera point is never selected. Utilizing this telemetry data, updates to the weights of the cameras within that gaming environment can be deployed such that more players may find that hidden item in the game.

In still further embodiments, the device 200 can also include one or more input/output controllers 216 for receiving and processing input from a number of input devices, such as a keyboard, a mouse, a touchpad, a touch screen, an electronic stylus, or other type of input device. Similarly, an input/output controller 216 can be configured to provide output to a display, such as a computer monitor, a flat panel display, a digital projector, a printer, or other type of output device. Those skilled in the art will recognize that the device 200 might not include all of the components shown in FIG. 2 and can include other components that are not explicitly shown in FIG. 2 or might utilize an architecture completely different than that shown in FIG. 2.

As described above, the device 200 may support a virtualization layer, such as one or more virtual resources executing on the device 200. In some examples, the virtualization layer may be supported by a hypervisor that provides one or more virtual machines running on the device 200 to perform functions described herein. The virtualization layer may generally support a virtual resource that performs at least a portion of the techniques described herein.

Finally, in numerous additional embodiments, data may be processed into a format usable by one or more machine-learning models 226 (e.g., feature vectors), and or other preprocessing techniques. The machine-learning ("ML") models 226 may be any type of ML model, such as supervised models, reinforcement models, and/or unsupervised models. The ML models 226 may include one or more of linear regression models, logistic regression models, decision trees, Naïve Bayes models, neural networks, k-means cluster models, random forest models, and/or other types of ML models 226.

The ML model(s) 226 can be configured to generate inferences to make predictions or draw conclusions from data. An inference can be considered the output of a process of applying a model to new data. This can occur by learning from at least the environmental data 228, the camera data 230, the scoring data 232, player data 234, and/or the cinematic data 236. These predictions are based on patterns and relationships discovered within the data. To generate an inference, the trained model can take input data and produce a prediction or a decision. The input data can be in various forms, such as images, audio, text, or numerical data, depending on the type of problem the model was trained to solve. The output of the model can also vary depending on the problem, and can be a single number, a set of coordinates within a three-dimensional space, a probability distribution, a set of labels/characteristics/parameters, a decision about an action to take, etc. Ground truth for the ML model(s) 226 may be generated by human/administrator verifications or may compare predicted outcomes with actual outcomes.

Although a specific embodiment for a device suitable for configuration with the full control camera logic suitable for carrying out the various steps, processes, methods, and operations described herein is discussed with respect to FIG. 2, any of a variety of systems and/or processes may be utilized in accordance with embodiments of the disclosure. For example, the device 200 may be in a virtual environment such as a cloud-based game administration environment, or it may be distributed across a variety of network devices or servers. The elements depicted in FIG. 2 may also be interchangeable with other elements of FIGS. 1 and 3-19 as required to realize a particularly desired embodiment.

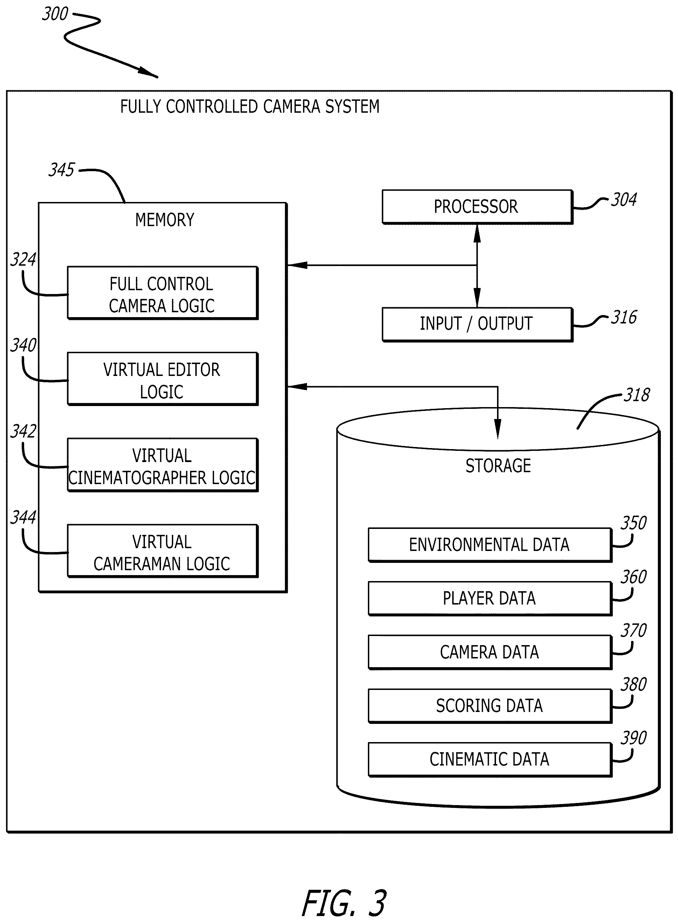

Referring to FIG. 3, an abstract block diagram of the components of a fully controlled camera system 300 in accordance with various embodiments of the disclosure is shown. In many embodiments, the fully controlled camera system 300 can be configured to include at least one or more processors 304, input/output functionality 316, a storage 318 as well as a memory 345 configured for executing one or more various logics. Specifically in the embodiment depicted in FIG. 3, the memory 345 comprises a full control camera logic 324 as well as a virtual editor logic 340, virtual cinematographer logic 342, and a virtual cameraman logic 344. Similarly, the storage 318 may comprise environmental data 350, player data 360, camera data 370, scoring data 380, and cinematic data 390.

In some embodiments, the full control camera logic 324 can facilitate the use of a camera system within a video game that is fully controlled by the system without input from the player. In certain embodiments, the full control camera logic 324 can work in conjunction with various other logics, such as a virtual editor logic 340, virtual cinematographer logic 342 and virtual cameraman logic 344. These logics may be configured as separate logics or may be interconnected or packaged/executed as a single logic.

In many embodiments, a virtual editor logic 340 in a fully controlled camera system 300 may consist of heuristics and rules designed to automatically adjust camera settings and movements to optimize the visual presentation of the game. This logic can analyze real-time game data and predefined criteria to make dynamic decisions about camera angles, transitions, and framing. Components of this analysis may include scene analysis, where the system evaluates the current context, such as the position of characters, action intensity, and environmental features, and the like. It could then use this analysis to choose the most appropriate camera angle and movement style, ensuring that important actions and details are highlighted effectively. In certain embodiments, this analysis may be done by evaluating different scores attached or otherwise associated with each available camera point within a gaming environment.

In a number of embodiments, a virtual cinematographer logic 342 may consist of heuristics and decision-making processes designed to simulate the artistic choices made by a human cinematographer. The virtual cinematographer logic 342 may, in various embodiments, analyze real-time game data and pre-defined cinematic rules to automatically control camera angles, movements, and transitions, enhancing the storytelling and gameplay experience. This logic may incorporate various data inputs, such as lens data, movement data, base score data, framing data, camera type data, cameraman data, and camera weight data, to create visually appealing and contextually appropriate scenes.

In more embodiments, the virtual cinematographer logic 342 can dynamically adjust the camera or selection of a pre-established camera point based on in-game events, character actions, and environmental cues. For example, it could switch to a close-up during a dramatic dialogue, pan to follow a fast-moving character, or adopt a wide-angle shot to showcase expansive landscapes or other points of interest. In further embodiments, the virtual cinematographer logic 342 may also account for cinematic techniques such as rule of thirds, leading lines, and depth of field to ensure aesthetically pleasing compositions. Additionally, this logic would manage transitions between different camera angles and movements smoothly, maintaining continuity and immersion.

In yet more embodiments, a virtual cameraman logic 344 may comprise a set of heuristics and rules designed to mimic the decisions, sounds, and movements of a human cameraman, creating a dynamic and immersive visual experience. This logic can process various types of camera data 370, such as lens settings, movement parameters, and framing preferences, to determine the best camera angles and transitions in real-time. In certain embodiments the virtual cameraman logic 344 may utilize the game's context, such as the player's actions, environmental changes, and narrative elements, to adjust the camera's position and orientation realistically.

The virtual cameraman logic 344 may also incorporate elements like camera type and cameraman data to simulate different styles of camera work, such as steady shots, handheld movements, or dramatic zooms and pans. Additionally, certain embodiments of the virtual cameraman logic 344 can evaluate can incorporate sounds and other action or indications that a real person is behind the game camera, increasing the overall level of realism within the game scene.

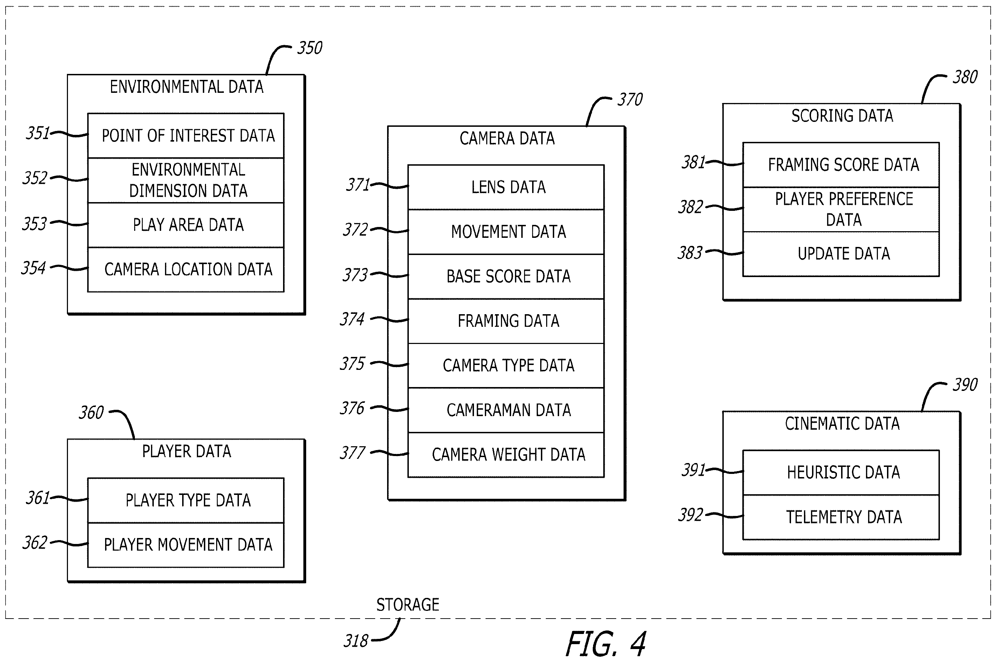

As discussed above in the embodiment depicted in FIG. 2, and in more detail below in the embodiment depicted in FIG. 4, the fully controlled camera system 300 may include a number of different types of available data to work with. These data may include environmental data 350 that can capture various aspects of the gaming environment being rendered and utilized. There may also be player data 360 that can describe different attributes of the player and their current avatar. Camera data 370 can be configured to provide various types of information related to how a camera may be set up, moved, and selected within a gaming environment. Scoring data 380 can help guide the system to determine what the correct or optimal score would be for each camera. Finally, cinematic data 390 can provide any specific heuristic or telemetry data that can better indicate what camera would be best be selected in a fully controlled camera system 300.

Although a specific embodiment for an abstract block diagram of the components of a fully controlled camera system 300 suitable for carrying out the various steps, processes, methods, and operations described herein is discussed with respect to FIG. 3, any of a variety of systems and/or processes may be utilized in accordance with embodiments of the disclosure. For example, the memory 345 can be an active memory that has the logics loaded/configured and is currently executing the various steps, processes, and/or methods described herein. In some embodiments, the memory 345 may be in a virtual environment such as a cloud-based game administration environment, or it may be distributed across a variety of network devices or servers. The elements depicted in FIG. 3 may also be interchangeable with other elements of FIGS. 1-2 and 4-19 as required to realize a particularly desired embodiment.

Referring to FIG. 4, an abstract block diagram of the data within a storage 318 of a fully controlled camera system in accordance with various embodiments of the disclosure is shown. In many embodiments, environmental data 350 may comprise various sub-types of data like point of interest data 351, environmental dimension data 352, play area data 353, and/or camera location data 354. However, as those skilled in the art will recognize, many other types of data may be included as well depending on the specific game and/or application.

In a number of embodiments, point of interest data 351 can include elements within the game environment that the camera should focus on or highlight. This data can encompass characters, significant objects, and interactive elements that are crucial to the gameplay or narrative. It may also include dynamic events, such as explosions, actions performed by the player or non-player characters, and environmental changes like weather effects. Additionally, point of interest data 351 may take into account contextual cues, such as dialogue or mission objectives, such that the camera may capture the most relevant and engaging aspects of the scene. This data can be formatted in a number of ways but may be a list of coordinates within a three-dimensional space and a corresponding value or score.

In more embodiments, environmental dimension data 352 can be configured as information about the game world's spatial and contextual characteristics. This data may include the size, shape, and layout of various game environments, such as rooms, outdoor areas, and obstacle placements, which helps the camera system navigate and frame scenes effectively. It can also comprise the dynamic elements within the environment, like moving objects, lighting conditions, and weather effects, to adjust camera settings and movements accordingly. Additionally, environmental dimension data 352 may account for interactive elements and potential player actions within these spaces, ensuring that the camera can anticipate and smoothly follow the player's movements while maintaining optimal angles and visibility of key gameplay moments.

In additional embodiments, play area data 353 can comprise various information for determining how a camera may be positioned and moved within the game's environment. This data may also include the spatial dimensions of the game environment where the player may traverse, including, but not limited to, boundaries, obstacles, and key landmarks, which can be utilized to help a camera navigate the environment without clipping through objects or getting obstructed. In certain embodiments, the play area data 353 may also incorporate dynamic elements like the location and movement patterns of characters, enemies, and interactive objects, ensuring they are effectively captured within the frame. Additionally, play area data might include designated points of interest or focal points that the camera should highlight during specific events or actions.

In further embodiments, camera location data 354 may include detailed information about the camera's spatial coordinates within the game environment, its orientation or rotation angles (pitch, yaw, and roll), and its movement vectors. This data can ensure that the camera can dynamically and accurately follow the action, providing optimal viewing angles and perspectives. In certain embodiments, the camera location data 354 may also encompass the camera's distance from the subject, height relative to the ground, and any constraints or boundaries to prevent clipping through objects or environments. Additionally, location data might include predefined waypoints or paths for scripted sequences, ensuring smooth transitions and cinematic shots.

In still more embodiments, player data 360 can include player type data 361 and player movement data 362. Player data 360 may be formatted as a list of attributes or parameters. In some embodiments, the player data 360 be a structure with a set of values that can be interpreted by other logic to implement one or more actions.

In yet further embodiments, player type data 361 may be configured as various attributes and preferences that define the player's or the player's avatar interaction style, skill level, and/or behavior patterns within the game. This data could encompass the player's preferred control settings, such as sensitivity levels for camera movement and specific input configurations. In some embodiments, the player type data 361 may also include information about the player's skill level, which can be inferred from gameplay statistics like reaction times, accuracy, and completion rates. Additionally, player type data 361 could track behavioral patterns, such as tendencies to explore, engage in combat, or focus on story-driven elements.

In still additional embodiments, player movement data 362 can comprise a comprehensive set of information detailing the player's actions and position within the game environment. In certain embodiments, this data may encompass the player's coordinates (X, Y, Z) in a three-dimensional virtual world for example, as well as direction and speed of the movement, and any changes in posture or stance (such as crouching, jumping, or lying prone). It may also include the player's interaction with the environment, such as climbing, swimming, or using objects. Additionally, player movement data 362 may capture or otherwise be modified to reflect input from controllers or keyboards, or other in-game actions.

In many embodiments, camera data 370 may include data related to the virtual camera rendering the game environment, such as, but not limited to, lens data 371, movement data 372, framing data 374, camera type data 375, cameraman data 376, and camera weight data 377. In various embodiments, other factors related to the camera, such as the base score data 373 can reflect a minimum score level for evaluation of a camera by a virtual editor logic.

In a number of embodiments, lens data 371 may comprise several elements that can define how the camera captures the visual scene. This may include the virtual focal length, which determines the field of view and how zoomed in or out the image appears. Aperture settings, which can control the depth of field and the amount of light entering the virtual lens, may also be part of lens data 371. Additionally, it can include information about focus distance, which affects how sharp or blurred objects appear at different distances. Lens data 371 might also capture lens distortion parameters to simulate the curvature or warping effects seen with certain types of lenses.

In more embodiments, movement data 372 can be configured as several components that may dictate how the camera transitions and orients itself in the game environment. This can include the camera's position coordinates (X, Y, Z) relative to the scene, ensuring it can move fluidly to follow the action or adjust perspective. It may also encompass the direction and velocity of the camera's movement, determining how quickly and smoothly it can pan, tilt, or zoom to new viewpoints. Additionally, rotational data can specify the camera's orientation in terms of pitch, yaw, and roll, allowing it to angle correctly and maintain a steady focus on important game elements. This data might also include interpolation methods to ensure smooth transitions between different camera positions and angles, as well as collision detection to prevent the virtual camera from passing through objects.

In additional embodiments, base score data 373 can relate to any initial settings or scores that are assigned to specific cameras. As discussed below, received telemetry data 392 and other update data 383 may require adjustment of the base score data 373 for specific virtual camera points within the game environment. In this way, certain issues can be addressed such as a camera failing to trigger in a fully controlled camera game, or a virtual camera being relied on for too long, which can remove some of the realism of that area of the game.

In further embodiments, framing data 374 may be comprised of several elements that can ensure the visual composition is aesthetically pleasing and functionally effective. In some embodiments, the framing data 374 can include the positioning of primary and secondary subjects within the frame, ensuring that key characters, objects, or actions are properly centered or placed according to various cinematic guidelines. Framing data 374 may also involve determining the appropriate zoom level and field of view to capture necessary details while maintaining contextual awareness of the surroundings. Framing data 374 can also be configured to consider the balance and symmetry of visual elements, managing empty space (negative space) around subjects to avoid cluttered or overly sparse scenes. Additionally, in certain embodiments, framing data 374 can take into account dynamic adjustments, such as re-framing during fast movements or significant scene changes, to keep important elements within the viewer's focus consistently.

In still more embodiments, camera type data 375 can comprise various attributes and settings that may define the specific characteristics and behaviors of the camera being simulated within the game. This can include the camera model, which dictates its physical properties such as size, shape, and weight. It may also encompass the type of lenses that may be used, such as wide-angle, telephoto, or fisheye, which affects the field of view and the degree of distortion. Additionally, in certain embodiments camera type data 375 can include preset configurations for different filming styles, such as stationary, handheld, drone, or Steadicam, each with unique movement and stabilization characteristics. This data may also specify the camera's response to environmental factors like lighting conditions and motion, as well as any built-in effects like zoom capabilities or focus adjustments.

In more further embodiments, cameraman data 376 may include, within the context of a virtual cameraman logic, may be comprised of parameters and attributes that simulate the behavior and decisions of a human camera operator. This data can include predefined movement patterns and styles, such as smooth tracking shots, dynamic panning, or quick zooms, based on the narrative or gameplay requirements. It may also encompass reaction times and sensitivity settings to mimic how a real cameraman would adjust to sudden changes in the scene, such as quick player movements or unexpected events. Additionally, cameraman data 376 can include preferences for framing, such as maintaining a certain distance from the player or focusing on specific elements within the environment as well as sound which can be reflected in additions to the game's sound generated during gameplay.

In still additional embodiments, camera weight data 377 can be associated with information that simulates the physical characteristics and inertia of the virtual camera, contributing to more realistic and dynamic camera movements. This data may include the simulated mass of the camera, which affects how it accelerates, decelerates, and responds to movements or changes in direction. It also encompasses the center of gravity and distribution of weight, which influence the balance and stability of the camera. Additionally, camera weight data 377 may account for the damping and friction parameters, which determine how smoothly the camera transitions between movements and how it handles sudden stops or starts.

In numerous embodiments, scoring data 380 can include various types of data that can affect the scoring of each camera within a gaming environment. This may include, for example, framing score data 381, player preference data 382, and update data 383. However, as those skilled in the art will recognize, other types of scoring data 380 may be utilized as needed.

In a number of embodiments, framing score data 381 may comprise an evaluation and ranking for different camera perspectives based on their effectiveness in framing key elements within the gaming environment. This data can be configured to assess the composition of each shot, ensuring that important subjects, such as the player character, NPCs, and significant objects, are properly positioned according to various cinematic principles like the rule of thirds, balance, focus, etc. An analysis of real-time game scenes can be done to assign scores to various camera angles or camera points based on their ability to highlight crucial action or narrative elements clearly and engagingly.

In more embodiments, player preference data 382 can relate to information tailored to individual player choices and habits, influencing how the camera system adjusts to enhance their gaming experience. This data can include preferred camera angles and perspectives, such as a first-person view, third-person over-the-shoulder view, or top-down perspective. These preferences can be communicated in the form of "hints" such as pushing one or more inputs, etc. The player preference data 382 can also take into account the player's adjustments to camera sensitivity and movement speed, reflecting their comfort level and play style. Additionally, player preference data 382 can capture preferred zoom levels, focus points during different gameplay scenarios (combat, exploration, cutscenes), and any specific settings related to camera behavior, such as automatic panning or manual control options.

In further embodiments, update data 383 can comprise information necessary to keep the camera system and overall game experience current and functioning optimally. This may include patches and bug fixes to address any issues or glitches that have been identified in the camera system or game mechanics. It may also encompass new features and enhancements that improve camera control, such as additional camera angles, improved AI for the virtual cameraman. Furthermore, update data may contain adjustments based on player feedback and telemetry data 392, such as refined camera movement to better match player preferences or optimized performance for different hardware configurations.

In additional embodiments, cinematic data 390 may comprise various data related to how virtual cameras can operate to comport with various photographic and cinematography principles, which can make the game experience seem more realistic and/or more cinematic. In some embodiments, the cinematic data 390 may include heuristic data 391 as well as telemetry data 392.

In still more embodiments, heuristic data 391 may include sets of commands, processes, and/or methods related to various principles that can aide in creating a more realistic and cinematic gaming experience. For example, heuristic data 391 may comprise various "if this, then that" transforms that can indicate when various actions should occur in response to other types of input or game states. In certain embodiments, heuristic data 391 may be formatted as an input into one or more machine learning processes for generation of an inference or output.

In yet further embodiments, telemetry data 392 can be associated with data that has been gathered from play tests or other playthroughs of the game by players. As players play the game, each playthrough may be unique depending on their choices as the player. Over time, this data can be captured in a private (i.e., non-identifying) manner and aggregated into telemetry data 392. This telemetry data 392 can subsequently be utilized to gather insight into the game experience, compare it to a model or desired experience, and generate decisions or update data 383 that can be useful in correcting or otherwise better guiding players through a more optimized game play experience.

Although a specific embodiment for an abstract block diagram of the data within a storage 318 of a fully controlled camera system suitable for carrying out the various steps, processes, methods, and operations described herein is discussed with respect to FIG. 4, any of a variety of systems and/or processes may be utilized in accordance with embodiments of the disclosure. For example, the data types described herein can vary depending on the type of application deployed and/or desired. For example, each specific data type may be concatenated into one data structure or be broken up into multiple additional data structures. Those skilled in the art will recognize that data can be formatted in a variety of ways beyond the specific embodiment depicted in FIG. 4. The elements depicted in FIG. 4 may also be interchangeable with other elements of FIGS. 1-3 and 5-19 as required to realize a particularly desired embodiment.

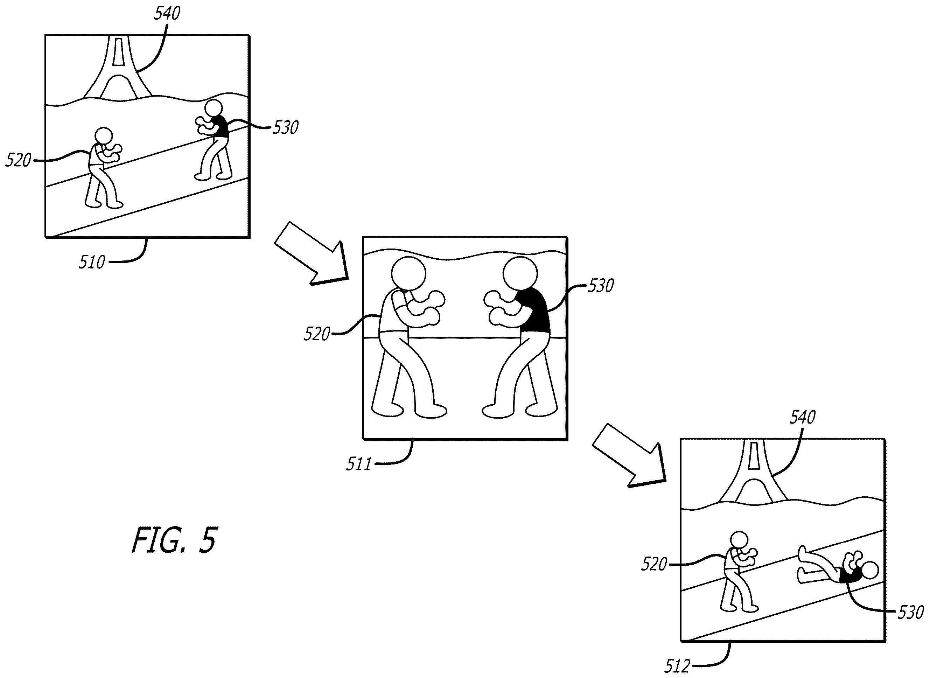

Referring to FIG. 5, a conceptual illustration of utilizing points of interest in a fully controlled camera system in accordance with various embodiments of the disclosure is shown. In many embodiments, a fully controlled camera system can utilize points of interest within a game scene to intelligently choose which camera points to render from, enhancing the overall player experience by maintaining focus on key elements and actions. Points of interest (POIs) are specific locations or objects within the game environment that are critical to the gameplay, narrative, or visual appeal. These can include characters, interactive objects, mission objectives, and significant environmental features.

In a number of embodiments, when determining a more optimal camera point, the system may first identify and prioritize any available POIs based on the current context of the game and/or environment. For example, during a combat sequence, the primary points of interest might be the player character, enemies, and key environmental hazards. In a narrative scene, POIs could include characters engaged in dialogue and important visual details that convey the story. In more embodiments, the fully controlled camera system may constantly update the list of active POIs as the player moves through the game and interacts with different elements and environments.

Using this dynamic list of POIs, the fully controlled camera system can evaluate the available camera points to determine which one provides the best view of various gameplay elements. In various embodiments, each camera point can be scored based on its ability to capture various gameplay aspects, including the prioritized POIs. This scoring may consider factors such as visibility, framing, and the angle of view relative to the POIs. The camera that scores highest in these evaluations is selected to render the scene, ensuring that the player has the most relevant and engaging perspective at all times. As these scores change, different triggers and/or thresholds can be configured to dynamically and automatically move the camera view around the scene in an engaging and non-jarring way.

In certain embodiments, the fully controlled camera system can anticipate upcoming POIs based on the player's actions and the game's progression. For instance, if the player is moving towards a key objective or about to interact with an important character, the camera system can preemptively adjust to a camera point that optimally frames these anticipated POIs. This predictive adjustment may help maintain a seamless visual experience and keeps the player focused on the most significant aspects of the game.

Furthermore, as described herein, the fully controlled camera system can be configured to incorporate cinematic techniques to enhance the presentation of POIs. For example, various automatic cuts may utilize zooming, panning, and/or tilting to draw attention to specific elements or create a dramatic effect. By intelligently leveraging points of interest and dynamically adjusting the weights associated with each of the camera points, the fully controlled camera system can significantly enhance the storytelling, gameplay, and visual immersion, providing a more cohesive and cinematic experience for the player.

In the embodiment depicted in FIG. 5, a first frame 510 can be generated prior to a player character 520 engages in a fight with an enemy character 530. The current framing includes in the background a first point of interest 540, which is the Eiffel Tower in this instance. As the player 520 and enemy 530 engage in fighting, the weights of the camera point evaluations are configured such that the close-up of the fight in the second frame 511 is determined to be more engaging and is thus cut to. Upon disengaging the fight, the game state may change, or, in certain embodiments, the weights associated with the scene may change such that the camera view in the third frame 512 is now more optimal, which again includes the first point of interest 540. In this way, cameras selected in the scene can best deliver the gameplay narrative and experience that is envisioned by the developers to maximize player emersion within the story and environment.

Although a specific embodiment for a conceptual illustration of utilizing points of interest in a fully controlled camera system suitable for carrying out the various steps, processes, methods, and operations described herein is discussed with respect to FIG. 5, any of a variety of systems and/or processes may be utilized in accordance with embodiments of the disclosure. For example, the transition between the first frame 510, second frame 511, and third frame 512 may be any type of cut such as a straight cut, but may also be a zoom in and out. A virtual editor logic may be configured to best make those decisions in order to facilitate a more cinematic feel, keeping the player engrossed in the story and gameplay. The elements depicted in FIG. 5 may also be interchangeable with other elements of FIGS. 1-4 and 6-19 as required to realize a particularly desired embodiment.

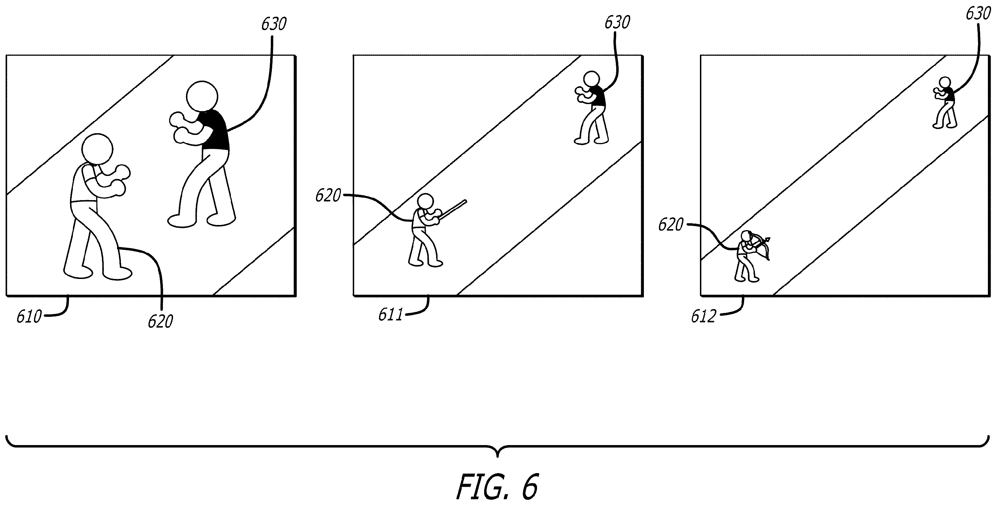

Referring to FIG. 6, a conceptual illustration of utilizing character traits in a fully controlled camera system in accordance with various embodiments of the disclosure is shown. In many embodiments, a fully controlled camera system can take various dynamic elements into account when choosing how to frame a camera cut or other change. These elements may include different aspects related to player choice or other adjustable settings that may be selected or changed by a player at any time during gameplay.

In the embodiment depicted in FIG. 6, a player 620 is encountering an enemy 630. However, the player may select from a variety of different weapons or attack strategies. Each type of attack can require the camera to adjust dynamically to provide the best possible view, ensuring that the player can clearly see and engage with the action. For example, in the first frame 610, the player is engaging in hand-to-hand combat with the enemy 630. In a number of embodiments, hand-to-hand fighting may need the camera to be positioned relatively close to the player character to capture the intense, fast-paced combat. This proximity can allow the player to see detailed movements and reactions, making it easier to execute precise attacks and dodges. The camera might cut in closer to emphasize punches, kicks, and grapples, highlighting the fluidity and impact of each move.

In the second frame 611, the player 620 has a medium range weapon, specifically a bow long staff for combat. For this type of attack, the camera may be adjusted farther out in various embodiments to accommodate the extended reach of the weapon. This type of combat can benefit from a balance between being close enough to see the player character's detailed movements and far enough to capture the staff's full range of motion. In some embodiments, the camera may need to zoom or cut back slightly and adjust its angle to ensure that both the player character and their target are visible within the frame.

Finally, in the third frame 612, the player 620 is engaging the enemy 630 with a bow and arrow. In these embodiments, the bow and arrow attacks present a different set of requirements for the fully controlled camera system. Here, the camera may be configured to zoom out even further to cover the distance between the player 620 and their potential target enemy 630. This wider field of view can be useful for allowing the player to aim accurately and track the arrow's trajectory. The camera might cut to an over-the-shoulder view or a third-person perspective that shows both the archer and the target area. Additionally, in certain embodiments, the camera system can employ cinematic techniques such as following the arrow in flight to emphasize the precision and impact of the shot.

These examples highlight how different player choices, movements, and designs can affect the selection and/or framing of different cameras during gameplay. In more embodiments the fully controlled camera system may also consider environmental factors that affect visibility. For example, in dense forest settings or crowded urban areas, the camera may be configured to navigate around obstacles and provide a clear line of sight. These choices can be factored into one or more logics that can make such selections automatically without player input.

Although a specific embodiment for a conceptual illustration of utilizing character traits in a fully controlled camera system suitable for carrying out the various steps, processes, methods, and operations described herein is discussed with respect to FIG. 6, any of a variety of systems and/or processes may be utilized in accordance with embodiments of the disclosure. For example, other dynamic player choices can affect camera framing, such as, but not limited to, player clothing and other equipment, the number of players, enemies, or non-playable characters, traveling with the player, mode of travel (foot, car, plane, etc.), and the like. The elements depicted in FIG. 6 may also be interchangeable with other elements of FIGS. 1-5 and 7-19 as required to realize a particularly desired embodiment.

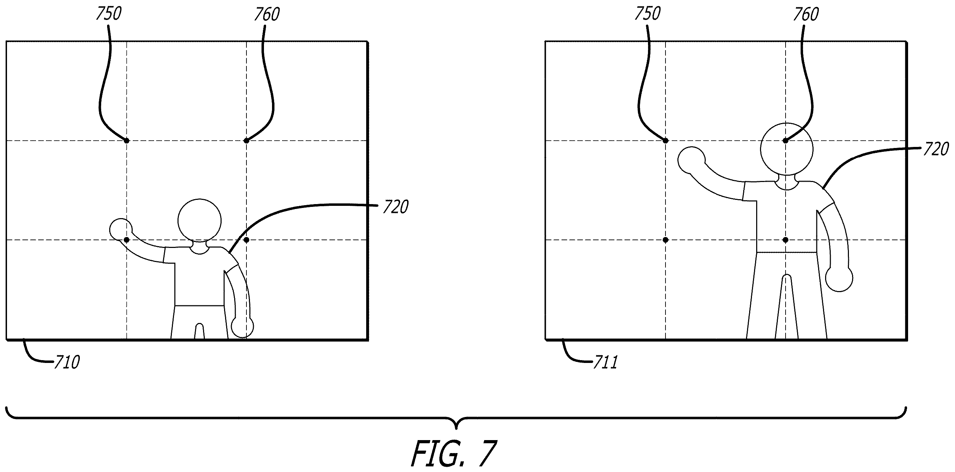

Referring to FIG. 7, a conceptual illustration of virtual camera framing using cinematographic principles in accordance with various embodiments of the disclosure is shown. In many embodiments, selecting and scoring a camera for optimal viewing in a game environment can be influenced by various cinematography principles. These principles can ensure that the visual storytelling is not only engaging but also enhances the player's understanding and immersion within the game world. Cinematography principles such as framing, composition, camera movement, and depth of field play roles in determining which camera angle will provide the best player experience. Other known principles such as not violating the one-hundred-eighty degree rule, can be adhered to for mimicking known movie styles that can further enhance the perceived quality of the game play.

In a number of embodiments, framing principles can be adhered to. Framing can involve the placement of subjects within the camera's virtual viewfinder. A well-framed shot can ensure that the main elements, such as the player character, enemies, and interactive objects, are clearly visible and appropriately positioned. Composition principles like the rule of thirds can guide this process, dividing the frame into nine equal segments and placing critical elements along these lines or their intersections.

This technique is shown in the embodiment depicted in FIG. 7. Specifically, in the first frame 710, the subject 720 is positioned within the near center of the first frame 710. The rule of thirds overlay creates some ideal intersection points such as the upper left intersection point 750 and upper right intersection point 760, both of which are not intersected by the subject 720. However, in the second frame 711, the camera has been repositioned such that the subject 720 is now intersecting on the upper right intersection point 760, satisfying the rule of thirds. By utilizing this technique, a more balanced and visually pleasing shot can be created that may draw the player's attention to important areas of the screen.

Other cinematic techniques can be utilized based on the current environment and available camera point locations. For example, smooth and deliberate camera movements can enhance the fluidity of gameplay and maintains the player's immersion. Cinematic techniques such as panning, tilting, and tracking may help follow the player's actions and maintain focus on dynamic elements within the game. A camera that moves naturally and responds to in-game events without abrupt or jarring transitions will increase the overall immersion of the game to the player. Additionally, camera movements that simulate human-operated cameras, adding subtle shakes or adjustments, can also increase the sense of realism and immersion, making the gameplay experience more engaging.

In additional embodiments, by manipulating depth of field, a camera can highlight specific elements while subtly blurring the background or foreground, guiding the player's attention to where it is most needed. In further embodiments, effective lighting and shadows can add cinematic depth and mood to the game environment such that lighting should be configured to not only illuminate the scene but also create contrast and highlight textures. In still more embodiments, the choice of camera angles can significantly affect how scenes are perceived. For example, higher angles can make characters appear vulnerable, while lower angles can convey power and dominance. A variety of perspectives, such as over-the-shoulder shots, first-person views, or wide-angle scenes, provide different levels of engagement and storytelling potential. A fully controlled camera system can be configured to switch between these angles depending on the context and narrative needs. These types of camera scoring can occur based on various weights or restrictions the developers establish in the game environment or scene such that the desired emotion from the player can be converted into a score that can be used to rank different camera angles associated with conveying those feelings.

Although a specific embodiment for a conceptual illustration of virtual camera framing using cinematographic principles suitable for carrying out the various steps, processes, methods, and operations described herein is discussed with respect to FIG. 7, any of a variety of systems and/or processes may be utilized in accordance with embodiments of the disclosure. For example, any combination of cinematography principles or other immersive rules that can aid in storytelling and player emersion may be utilized in scoring of different camera points within a game environment. The elements depicted in FIG. 7 may also be interchangeable with other elements of FIGS. 1-6 and 8-19 as required to realize a particularly desired embodiment.

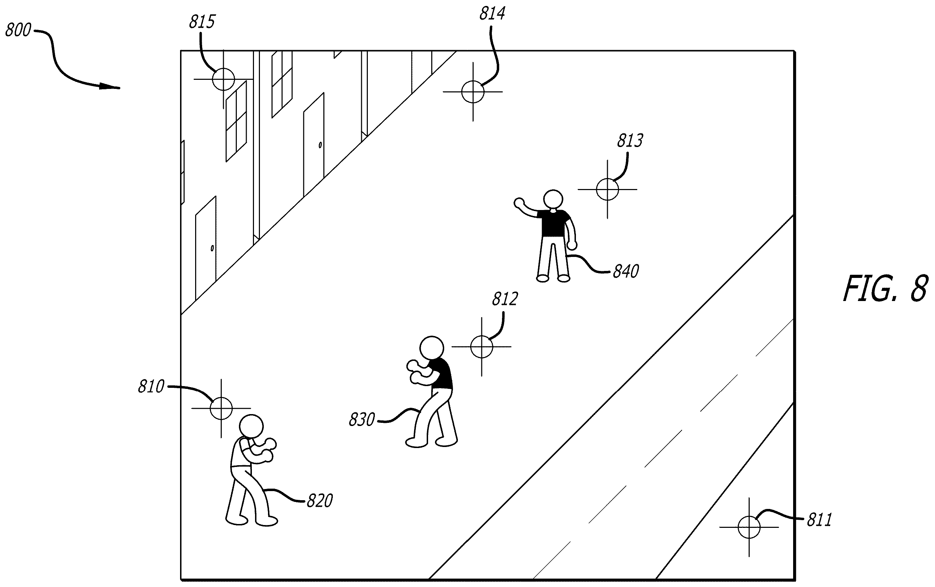

Referring to FIG. 8, a conceptual illustration of a game environment 800 with a plurality of available camera points 810-815 in accordance with various embodiments of the disclosure is shown. In many embodiments, each game environment or scene may be configured with a plurality of camera points where a camera may be generated or otherwise configured to render a scene. These camera points may be dynamically added to a scene, such as camera points that are relative to the position of a player or other character. However, in a number of embodiments, each scene may have a plurality of fixed camera points that are placed within the scene by the developers.

For example, in the embodiment depicted in FIG. 8, the game environment 800 has a player 820 ready to engage with a first enemy 830 while a second enemy 840 looks on. The environment is set on the side of a street and can have a plurality of camera points 810-815 positioned with the scene at any given time. Each camera point 810-815 may be selected at any time to position a camera at to start rendering the scene for the player, effectively generating a cut within the scene. In additional embodiments, adding these different camera points 810-815 within a game environment can be a detailed and strategic process. This can ensure that the camera points 810-815 are positioned to capture the action effectively, enhancing both gameplay and visual storytelling.

In some embodiments, the first step for placing camera points within an environment 800 can involve planning and design. Game developers can map out the scene, identifying key locations where significant actions may occur. For a fight scene on the side of the road, this might include the player's initial position, enemy spawn points, and areas where the combat is likely to move. During this planning phase, the development team may consider the environment's layout, potential obstacles, and the flow of action to determine optimal camera placement. They may also decide on the types of shots that would best capture the intensity and dynamics of the fight, such as close-ups, wide angles, and over-the-shoulder shots.

Next, the camera points can be strategically placed within the game environment. Placement may be entry into a data structure configured for camera point listings, or maybe points relative to other locations within the game environment. For example, an "over-the-shoulder" camera would need to be dynamically moved to be over the shoulder of the player or character as they move throughout the environment. In additional embodiments, once the camera points are placed, they can be integrated into the game engine with specific parameters, including position, orientation, field of view, depth of field, and other parameters. These parameters can be fine-tuned to ensure that each camera point provides the desired perspective and visual quality. The integration process may also involve setting up the camera logic, which can dictate how and when the camera points will switch based on the player's actions, the progression of the fight, changes in the overall camera scores, etc.

In still more embodiments, testing and iteration can be performed. The specific scene can be played through multiple times to evaluate the effectiveness of the camera points. Testers may provide feedback on the clarity of the action, the fluidity of camera transitions, and the overall visual experience. Based on this feedback, adjustments can be made to camera point positions, angles, and transition logic. For example, if a particular camera point consistently provides poor visibility during critical moments, it may be repositioned or replaced.

In still further embodiments, refinement can occur to ensure the environment 800 responds appropriately during the gameplay. This may include programming or otherwise adjusting the weights of the camera system to prioritize certain camera points that best capture the current action. For example, when the player executes a special move or engages multiple enemies simultaneously, the system might switch to a camera point that provides a dramatic, close-up view of the action. Conversely, when the player is moving between engagements or assessing the battlefield, a wider angle might be used to provide better situational awareness.

In the embodiment depicted in FIG. 8, the player 820 is associated with a first camera point 810 that is set up to be a dynamic over-the-shoulder camera point. This first camera point 810 can move along with the player through the scene. A second camera point 811 can be configured to be located across the road. This second camera point 811 could capture a side profile of the player 820 and either the first enemy 830 and/or second enemy 840. However, this view may become occluded by virtual cars that drive by during the scene. Thus, the camera score for the second camera point 811 may be lower than other camera points.

The environment 800 depicted in FIG. 8 also includes a first enemy 830 who also has a third camera point 812 associated with them that may also be configured as an over-the-shoulder camera that moves dynamically with the first enemy 830. Similarly, the second enemy 840 may have a fourth camera point 813 associated with them that is also dynamic in nature. A fifth camera point 814 can positioned toward the other end of the environment 800 which could capture the viewpoint of the enemies 830, 840 attacking the player 820. This fifth camera point 814 may, for example, be configured with a cinematic camera with a low focal depth, while the first camera point 810, third camera point 812, and fourth camera point 813 are configured more like handheld cameras with corresponding lens and weight settings. Finally, the environment 800 may have a sixth camera point 815 that can be selected to gain a more overhead view of the fight between the player 820 and the first enemy 830 and/or second enemy 840. Each of these camera points 810-815 may be selected at any time during the play through of the game environment 800. The selection or cut to each camera point can be done in response to an event that necessitates a cut or through an evaluation of camera scores that indicate that, based on the current game play state, one camera point would be sufficiently superior to render from.

Although a specific embodiment for a conceptual illustration of a game environment with a plurality of available camera points suitable for carrying out the various steps, processes, methods, and operations described herein is discussed with respect to FIG. 8, any of a variety of systems and/or processes may be utilized in accordance with embodiments of the disclosure. For example, every scene may have a similar combination of dynamic and/or static camera points. The elements depicted in FIG. 8 may also be interchangeable with other elements of FIGS. 1-7 and 9-19 as required to realize a particularly desired embodiment.

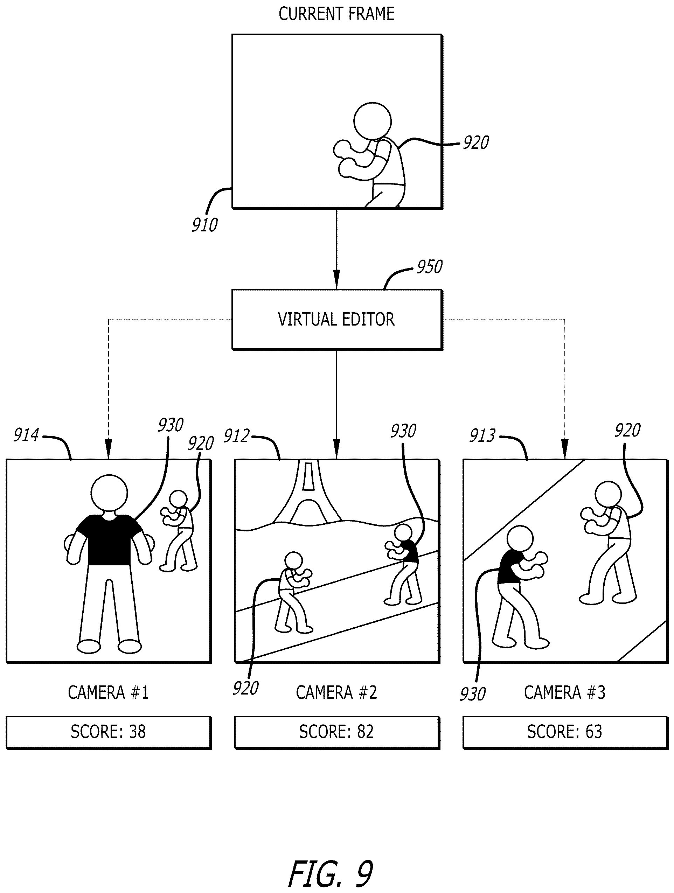

Referring to FIG. 9, a conceptual illustration of a virtual editor 950 in a fully controlled camera system in accordance with various embodiments of the disclosure is shown. A virtual editor logic 950 can operate as an intelligent system that continuously evaluates the visual and contextual data of the game in real-time, ensuring that the most engaging and clear perspectives are presented to the player.

The virtual editor logic 950 can begin by assessing the current frame 910, examining key elements such as the player 920 and their position, the actions of enemies, and the overall layout of the environment. The virtual editor logic 950 can, in certain embodiments, identify points of interest and evaluate the current frame or camera's effectiveness in capturing these elements. Based on this assessment, the virtual editor logic 950 can calculate a score for the current frame 910 and associated camera, factoring in criteria such as framing quality, clarity of action, player and enemy visibility, and adherence to cinematography principles like composition and focus, among others. In some embodiments, if the score falls below a certain threshold, indicating that the current camera is not providing the optimal view, the virtual editor logic 950 can scan available alternative camera points. In the embodiment depicted in FIG. 9, that can include a first camera 914, a second camera 912, and a third camera 913.

In numerous embodiments, the first camera 914 can be an over-the-shoulder shot from behind the enemy 930 towards the player 920. The current score on this camera is thirty-eight, but changes every cycle, which may be any change in game state or over a fixed interval of time. Likewise, the second camera 912 is a point of interest shot of the player 920 on the left and the enemy 930 on the right. The score for that camera is at eight-two. Finally, the third camera 913 is configured as a close up between the player 920 and the enemy 930 from the reverse side. That third camera 913 currently has a score of 63 which may also change in response to any change in game play state.

In still additional embodiments, each alternative camera can be scored based on its potential to improve the visual presentation of the scene. The virtual editor 950 can evaluate how well each camera can capture the important elements, maintain smooth transitions, and enhance the player's understanding and engagement with the action. It may also consider various factors, such as whether a camera provides a better angle of the player's movements, offers a clearer view of incoming threats, or creates a more immersive and dramatic perspective.

Once the virtual editor 950 identifies the highest-scoring alternative camera, it may initiate a cut to this new camera angle. In the embodiment depicted in FIG. 9, the virtual editor logic 950 has chosen camera two (i.e., the score is the highest of the available other camera points). Any subsequent transition can be executed smoothly to avoid disrupting the player's experience. This can involve cinematic techniques like match cuts or cross-fades, ensuring the change in perspective feels natural and enhances the storytelling and gameplay flow.

In still more embodiments, the virtual editor logic 950 can utilize a continuous evaluation of the current frame to determine the effectiveness of the existing camera angle. By scoring and comparing alternative cameras based on real-time data and cinematographic principles, it can select and cut to the most optimal camera, ensuring that the player's visual experience is always clear, engaging, and immersive.

Although a specific embodiment for a conceptual illustration of a virtual editor 950 in a fully controlled camera system suitable for carrying out the various steps, processes, methods, and operations described herein is discussed with respect to FIG. 9, any of a variety of systems and/or processes may be utilized in accordance with embodiments of the disclosure. For example, there may be a large number of alternative cameras to pick from. In more embodiments, the virtual editor logic 950 is incorporated into other logics and can be utilized to manage the different camera points. The elements depicted in FIG. 9 may also be interchangeable with other elements of FIGS. 1-8 and 10-19 as required to realize a particularly desired embodiment.

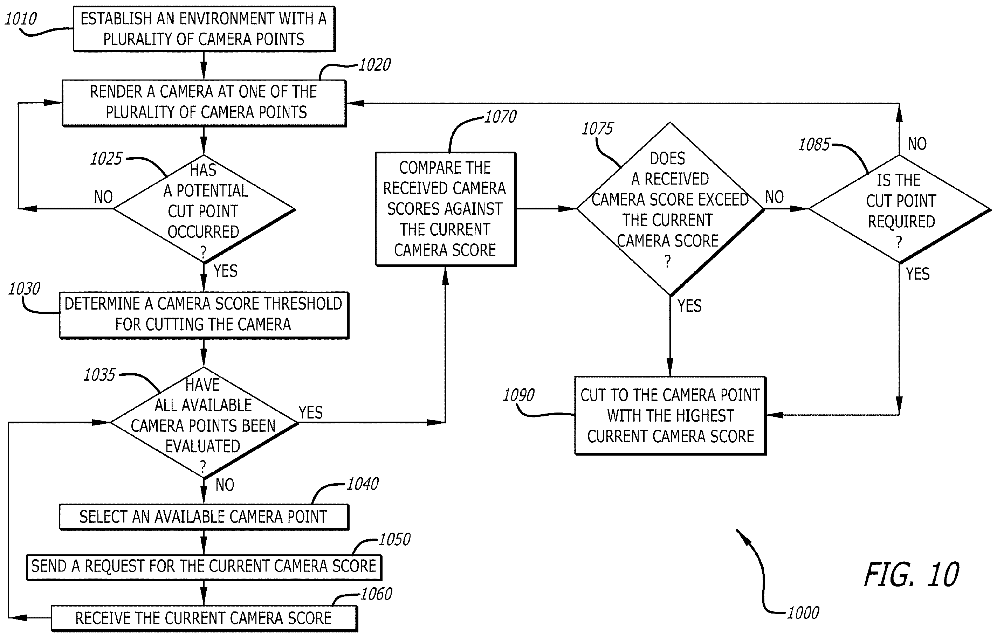

Referring to FIG. 10, a flowchart of a process 1000 for evaluating preexisting camera scores in accordance with various embodiments of the disclosure is shown. In many embodiments, the process 1000 can establish an environment with a plurality of camera points (block 1010). Establishing these game environments with a plurality of camera points can involve a detailed process where designers and cinematographers collaborate to map key areas and plan the cinematic approach for the game. This can include strategically placing camera points to capture optimal angles and views, considering factors like visibility, framing, and smooth tracking of player movement. Each camera point can be utilized by the game engine with specific parameters, allowing dynamic transitions based on gameplay conditions and player actions.

In a number of embodiments, the process 1000 can render a camera at one of the plurality of camera points (block 1020). A camera point in a game environment can have a camera associated with it, enabling the rendering of the game scene from that specific location. When the game engine determines that a particular camera point should be selected, the camera associated with that camera point is activated. The camera's parameters, such as position, orientation, field of view, and depth of field, can be configured to match the predefined settings of the camera point. Once activated, the camera can start rendering the game environment from its perspective, capturing all visual elements such as characters, objects, and scenery.

In more embodiments, the process 1000 can determine if a potential cut point has occurred (block 1025). Various events and scenarios can lead to a "cut point," where the process 1000 can be configured to automatically transition to a different location or angle to enhance the player's experience or transition to a new scene/environment/cutscene, etc. For example, when the player enters a new area or gaming environment, a cut point may occur to provide an optimal overview of the new surroundings, helping the player orient themselves quickly. Significant gameplay moments, such as boss fights, major plot reveals, or important character interactions, might trigger camera cuts to emphasize the event's significance and enhance the narrative impact. During fast-paced action scenes like combat or chase sequences, frequent camera cuts can maintain a dynamic and engaging perspective, ensuring the player has a clear view of the action and any threats.

If it is determined that no potential cut point has occurred, the process 1000 can continue to render the camera at one of the plurality of camera points (block 1020). Typically, this is the same camera that has previously been utilized. In fact, this step can occur without a change in the current rendering or camera selection/processing of the current camera, such that the player may not be aware, and no cut occurs.

However, if it is determined that a potential cut point has occurred, then the process 1000 can determine, in various embodiments, a camera score threshold for cutting the camera (block 1030). The threshold score may be generated by assessing the current camera's performance across several criteria, such as framing quality, clarity of action, smoothness of movement, and alignment with player preferences. Additionally, player feedback and historical data on preferred camera settings can influence the threshold score, ensuring it reflects an optimal balance between technical performance and user experience. In some embodiments, the threshold can be set with a certain buffer to avoid a feedback loop where the process 1000 gets stuck in a series of quick cuts that are sub-optimal for player experience.

In further embodiments, the process 1000 can further determine if all available camera points have been evaluated (block 1035). A given game environment may be populated with a plurality of camera points that can host or otherwise render a virtual camera. If a cut is to occur, some or all of these available camera points within the scene or environment can be evaluated for a potential cut point.

If it is determined that all available camera points have not been evaluated, then the process 1000 can, in several embodiments, select an available camera point (block 1040). In a given scene, any number of camera points may be available. As discussed previously, each scene or gaming environment may have a number of pre-selected or established camera points. In certain embodiments, the process 1000 may be able to generate dynamic or unique camera points in relation to the current game state.

In additional embodiments, the process 1000 can send a request for the current camera score (block 1050). These requests can be formatted as a function call or may be triggered in response to an earlier step within the process 1000. It is contemplated that various embodiments may have one or more camera points generate scores dynamically such that a score is readily available when needed.

In still more embodiments, the process 1000 can receive the current camera score (block 1060). When one or more camera points have dynamically or continuously generated or otherwise evaluated camera scores available, receiving the scores may be faster than handling a request to generate a new camera score. However, as those skilled in the art will recognize, any mix of these methods may be utilized based on the needs of the current application and/or the available resources.

However, if it is determined that all available camera points have been evaluated, then the process 1000 can compare the received camera scores against the current camera score (block 1070). In a number of embodiments, the comparison can be done on a one-to-one basis, or may be done by sorting a list of values or tables such that a highest score is available or otherwise accessible. It is contemplated that any of a variety of data comparison methods may be utilized based on the current desired application. Once known, this highest generated score can be compared against the current camera score, which should preferably be formatted within the same scale or grade as the generated camera scores and/or threshold.

In yet further embodiments, the process 1000 can determine if the received camera score exceeds the current camera score (block 1075). This determination can be a simple evaluation of the address or data structure associated with the highest camera score. In some embodiments, the evaluation may require that the generated camera score not simply exceed the current camera score, but also a current camera score plus buffer value or the previously determined threshold. The choice of determination can be done in response to certain conditions or game states as desired by the developers.

If it is determined that the received camera score does exceed the current camera score, then the process 1000 may, in certain embodiments, cut to the camera point with the highest current camera score (block 1090). The cut point may be configured to generate a cut to a different or more optimal camera within the game environment, which can be determined by the camera point with the highest received or generated camera score. In some embodiments, the cut may be to the camera that has the highest score that also satisfies one other condition that is set as a restriction within the cut point (e.g., don't cut to the close-up camera, etc.). In some embodiments, this restriction can be indicated by adjusting the weight of one or more characteristics of the camera point. In additional embodiments, that restriction can simply be an indicator that a specific camera point should not be picked during the evaluation process.

However, if it is determined that the received camera scores do not exceed the current camera score, then various embodiments of the process 1000 may further determine if the cut point is required (block 1085). The potential cut point may occur but end up being determined that the current camera is still the best suited for rendering. However, various situations or game states may occur where a cut point is required from the current camera. For example, a camera point may have an enemy or other character occluding the camera view of the player. While the evaluation process may deem this camera to be insufficient via weight changes in the scoring process, the developers may want to make certain heuristics or other conditions that require that a cut occur away in certain situations.

If it is determined that the cut point is required, then many embodiments of the process 1000 can cut to the camera point with the highest received camera score (block 1090). In these cases, the process 1000 may simply select the camera point with the second highest score to cut to. However, if it is determined that the cut point is not required, the process 1000 can continue to render the camera at one of the plurality of camera points (block 1020). Again, this may transpire such that the player is not aware that a cut decision or the process 1000 even occurred.

Although a specific embodiment for a flowchart of a process for evaluating preexisting camera scores suitable for carrying out the various steps, processes, methods, and operations described herein is discussed with respect to FIG. 10, any of a variety of systems and/or processes may be utilized in accordance with embodiments of the disclosure. For example, the determination of a threshold may be utilized to determine if any cut point should occur in the first place, thus triggering a process like the one depicted in FIG. 10. In these embodiments, the camera scores of the other camera points are continuously generated and compared against the threshold value until one camera point score exceeds that threshold, kicking off the cutting process. The elements depicted in FIG. 10 may also be interchangeable with other elements of FIGS. 1-9 and 11-19 as required to realize a particularly desired embodiment.

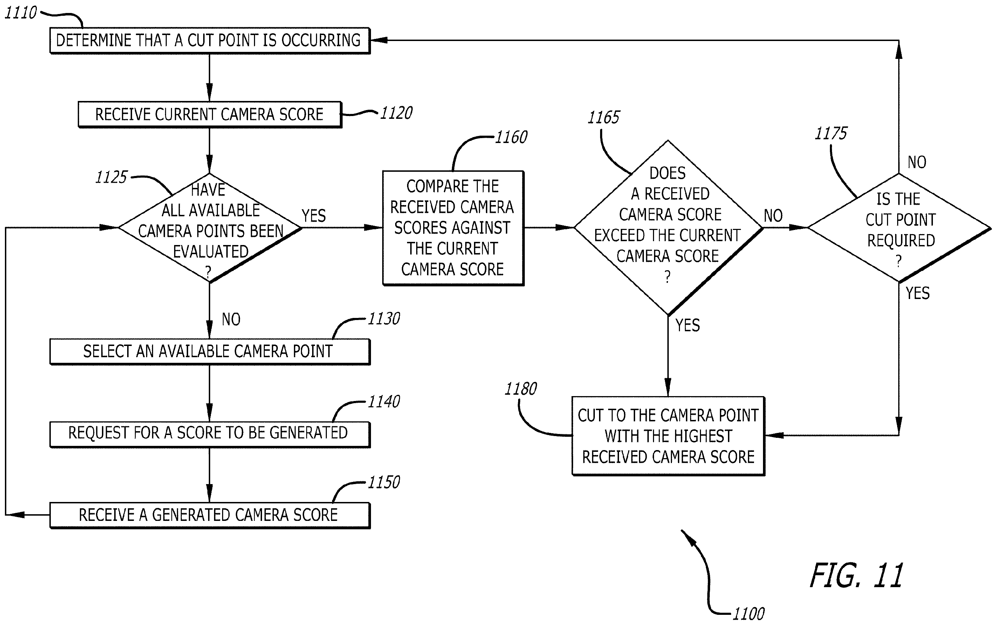

Referring to FIG. 11, a flowchart of a process 1100 for evaluating generated camera scores in accordance with various embodiments of the disclosure is shown. In many embodiments, the process 1100 can determine that a cut point is occurring (block 1110). Various events and scenarios can lead to a "cut point," where the camera is configured to automatically transition to a different location or angle to enhance the player's experience. For example, when the player enters a new area or gaming environment, a cut point may occur to provide an optimal overview of the new surroundings, helping the player orient themselves quickly. Significant gameplay moments, such as boss fights, major plot reveals, or important character interactions, might trigger camera cuts to emphasize the event's significance and enhance the narrative impact. During fast-paced action scenes like combat or chase sequences, frequent camera cuts can maintain a dynamic and engaging perspective, ensuring the player has a clear view of the action and any threats.

When engaging with puzzles or interacting with objects, the camera can cut to a focused view that highlights the relevant elements, aiding in solving the puzzle or understanding the interaction. If the player's position relative to the environment changes drastically, such as climbing to a higher vantage point or descending into a lower area, a cut point can adjust the camera to maintain an optimal viewing angle. During cutscenes or extended dialogue sequences, the camera may cut to pre-determined angles that best showcase the characters and their expressions, enhancing the storytelling aspect of the game. Additionally, if the player's view becomes obstructed by environmental elements like walls, trees, or large objects, a cut point can shift the camera to a better angle, ensuring the player maintains clear visibility.

In a number of embodiments, the process 1100 can receive a current camera score (block 1120). The current camera score can represent a real-time evaluation of how effectively the active camera setup adheres to one or more scoring schemes. This current score can consider several factors as discussed above, including framing quality, clarity of the action, smoothness of movement, and overall contribution to immersion and gameplay. As the game progresses, the current camera score can fluctuate, responding to new changes within the scene. In some embodiments, the score is constantly updated and available upon request. In certain embodiments, the current camera score is not requested or otherwise accessed until a direct comparison is done elsewhere within the process 1100.

In more embodiments, the process 1100 can determine if all available camera points have been evaluated (block 1125). As previously discussed, a given game environment may be populated with a plurality of camera points that can host a virtual camera. If a cut is to occur, some or all of these available camera points within the scene or environment can be evaluated for a potential cut point.

If it is determined that the not all available camera points have been evaluated, then the process 1100 can select an available camera point (block 1130). In a given scene, any number of camera points may be available. As discussed previously, each scene or gaming environment may have a number of pre-selected or established camera points. In certain embodiments, the process 1100 may be able to generate dynamic or unique camera points in relation to the current game state.

In additional embodiments, the process 1100 can request for a score to be generated (block 1140). In some embodiments, the available camera points may have scores dynamically evaluated for each available camera point. However, in certain embodiments, the camera points may not generate a score until one is requested. This request can be done via a function call or other similar process. The request may also be transmitted directly to each camera point or broadcast to a number of camera points.

In further embodiments, the process 1100 can receive a generated camera score (block 1150). In response to a request for a camera score, the process 1100 can receive a score for each of the available or requested camera points at once or individually with the scores being stored in an intermediate value or other container. In some embodiments, the score can be received via a return value from a function call. In certain embodiments, the received camera scores may only be stored as a single value associated with the camera point with the highest score, until another generated camera score is received that is higher, thus "knocking" the old score from the current storage.

However, if the process 1100 determines that all camera points have been evaluated, then various embodiments can compare the received camera scores against the current camera score (block 1160). As previously discussed, the comparison can be done on a one-to-one basis, or may be done by sorting a list of values or tables such that a highest score is available or otherwise accessible. Once known, this highest generated score can be compared against the current camera score, which should preferably be formatted within the same scale or grade as the generated camera scores.

In still more embodiments, the process 1100 can determine if a received camera score exceeds the current camera score (block 1165). This determination can be a simple evaluation of the address or data structure associated with the highest camera score. In some embodiments, the evaluation may require that the generated camera score not simply exceed the current camera score, but also a current camera score plus buffer value or a unique predetermined threshold. The choice of determination can be done in response to certain conditions or game states as desired by the developers.

If it is determined that a received camera score does exceed the current camera score, the process 1100 can cut to the camera point with the highest received camera score (block 1180). Ultimately, the cut point may be configured to generate a cut to a better camera within the game environment, which can be determined by the camera point with the highest received or generated camera score. As discussed above, the cut may be to the camera that has the highest score that also satisfies one other condition that is set as a restriction within the cut point (e.g., don't cut to the close-up camera, etc.). In some embodiments, this restriction can be indicated by adjusting the weight of one or more characteristics of the camera point. In additional embodiments, that restriction can simply be an indicator that a specific camera point should not be picked during the evaluation process.

However, if it is determined that the received camera scores do not exceed the current camera score, then the process 1100 may, in certain embodiments, further determine if the cut point is required (block 1175). In various embodiments, the potential cut point may occur but end up determining that the current camera is the best suited for rendering still. However, various situations or game states may occur where a cut point is required away from the current camera. For example, a camera point may have an enemy or other character occluding the camera view of the player. While the evaluation process may deem this camera to be insufficient via weight changes in the scoring process, the developers may want to make certain heuristics or other conditions that require that a cut occur away in certain situations. This may also be desired in some embodiments during a transition to or from a cut scene.

If it is determined that the cut point is required, then the process 1100 can, in various embodiments, cut to the camera point with the highest received camera score (block 1180). In these cases, the process 1100 may simply select the camera point with the second highest score to cut to. However, if it is determined that the cut point is not required, then the process 1100 may again continue operating until it is determined that another cut point is occurring (block 1110). This may lead in certain circumstances to keep a static camera shot active, even during multiple cut points.

Although a specific embodiment for a flowchart of a process for evaluating generated camera scores suitable for carrying out the various steps, processes, methods, and operations described herein is discussed with respect to FIG. 11, any of a variety of systems and/or processes may be utilized in accordance with embodiments of the disclosure. For example, the specific steps shown for the evaluation may vary depending on the application desired. If the cut point is triggered by the current camera falling below a particular score, the process 1100 may be triggered, but then cancelled if the current camera score again exceeds a particular cut point threshold. The elements depicted in FIG. 11 may also be interchangeable with other elements of FIGS. 1-10 and 12-19 as required to realize a particularly desired embodiment.

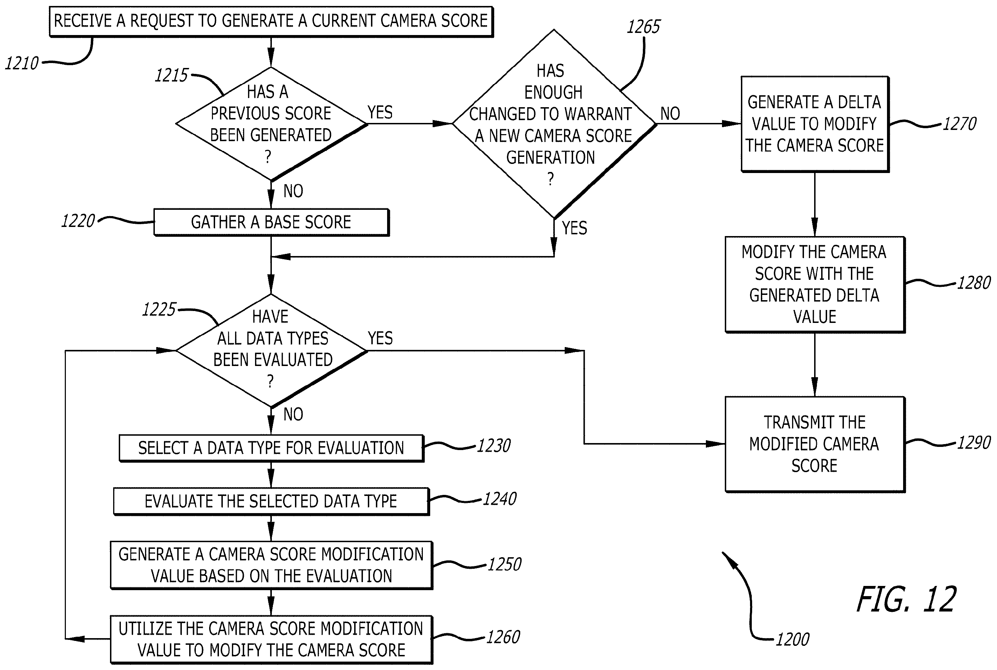

Referring to FIG. 12, a flowchart of a process 1200 for generating a camera score in accordance with various embodiments of the disclosure is shown. In many embodiments, the process 1200 can receive a request to generate a current camera score (block 1210). In certain embodiments, the camera points or cameras associated with the process 1200 can continuously generate scores as changes in game states occur. However, in some embodiments, the generation of a score may only occur in response to a received request.

In a number of embodiments, the process 1200 can determine if a previous score has been generated (block 1215). As previously discussed, a camera point or camera within a game environment may generate a score multiple times. In some cases, if a score was just generated, a full re-calculating of the score may not be needed. However, as different scenes and game environments are generated and/or released within a game session, different camera points may not have been evaluated subsequently to instantiation.

If it is determined that a previous score has not been generated, then various embodiments of the process can gather a base score (block 1220). In various embodiments, each camera point may have an associated base score value that can weigh the overall score. In some embodiments, such as the embodiment depicted in FIG. 12, the base score is gathered and simply modified in response to other data type evaluations.

In more embodiments, the process 1200 can further determine if all data types have been evaluated (block 1225). Data types can refer to any heuristic or output from one or more machine-learning processes that can be derived from or otherwise associated with different camera characteristics, photographic, and/or cinematography principles. For example, some embodiments of the process 1200 may assess framing quality, ensuring that key elements such as the player character, NPCs, and significant objects are well-positioned and visible according to cinematic principles like the rule of thirds, balance, and the like. Other data types, such as, for example, movement data can be analyzed to determine the smoothness and fluidity of the camera transitions, avoiding abrupt or jarring changes that could disrupt the player's immersion. By integrating these evaluations, embodiments of the process 1200 can generate a comprehensive score that reflects the potential camera's effectiveness as a cutting point target.

If it is determined that all data types have not been evaluated, then some embodiments of the process 1200 can select a data type for evaluation (block 1230). As discussed above, data types for evaluation can involve different types of data or sub-data associated with the game state, camera point, virtual camera, gaming environment, or other relevant aspect. In some embodiments, only certain data types are selected based on recent changes in the game state, or in response to one or more limitations placed on the score generation request.

In additional embodiments, the process 1200 can evaluate the selected data type (block 1240). The evaluation can be done based on the data type being evaluated. As those skilled in the art will recognize, each data type can require a unique evaluation to generate a relative score for the camera point. For example, evaluations on framing may require the generation or pseudo-generation of a virtual camera to render the scene or determine what elements in the game scene would be captured or otherwise rendered by the camera were it to be cut to. In contrast, when evaluating a cinematography principle, such as focal length, the evaluation may be limited based on a restriction or property set for that particular camera point, etc. (e.g., a "drone" camera for example, may not be equipped with a high-quality cinema lens to mimic real-life limitations, etc.)

In further embodiments, the process 1200 can generate a camera score modification value based on the evaluation (block 1250). Based on the different types of evaluations done, the results may need to be scaled or otherwise converted to comport with the current score being generated/evaluated/modified. For example, how a subject fits in a frame responsive to the "rule of thirds" principle may be a binary evaluation, or may be linear or exponentially scored based on a subject's proximity to a proper intersection point. In some embodiments, this score generation may also be formatted sufficiently based on the weight applied to the data type. In additional embodiments, a generated initial or raw score may be scaled with a multiplier or otherwise cross-referenced within a conversion table prior to being used by the process 1200 for score generation.

In still more embodiments, the process 1200 can utilize the camera score modification value to modify the camera score (block 1260). As previously discussed, various embodiments may have an initial base score, and each subsequent data type evaluated can modify that value either closer or farther away from an ideal camera score. However, in certain embodiments, the score may just be summed from each derived data type value, both positive and/or negative.

If it is now determined that all data types have been evaluated, then the process 1200 can transmit the modified camera score (block 1290). Once all data types have been utilized to modify the camera score, the process 1200 can take that final value and send it back to the requesting element. In some instances, this transmission can be done via a return value to a function call. In numerous embodiments, the transmission can be to store the value in a storage space addressable by the requesting element. However, those skilled in the art will recognize that there are various ways to properly pass a value from one process 1200 to another.

In yet further embodiments, if it is determined that a previous score has been generated, then the process 1200 can additionally determine if enough change has occurred to warrant a new camera score generation (block 1265). Again, in certain instances, a full reevaluation of the camera score may not be needed. In these cases, some embodiments may only require the generation of a delta value to offset the previously generated score. In these embodiments, the delta can be generated by evaluating only the aspects that have changed since the last camera score generation.

If it is determined that enough change has occurred, then the process 1200 can in various embodiments, evaluate the available data types (block 1225). In certain embodiments, the process 1200 may instead gather a new base score prior to evaluating the data types. The determination of change may be directly related to the elapsing of time or a fixed value such as the number of game state changes, data values changes, scene environment changes, etc. This determination may, in some embodiments, be referencing a flag that can be tripped upon one or more events.

However, if it is determined that not enough change has occurred since the previous score was generated, then the process 1200 can, in some embodiments, generate a delta value to modify the camera score (block 1270). In various embodiments, the delta value can be generated by evaluating only a subset of the data types. In some embodiments, the delta value can be estimated based on the camera's proximity to another previously evaluated camera. This may be beneficial for dynamically moving cameras that may not change much from one position to the next along a movement path.

In still additional embodiments, the process 1200 can modify the camera score with the generated delta value (block 1280). Similar to above, the modification of the camera score can be done via a series of evaluations that can modify that previous camera score either closer or farther away from an ideal camera score. However, in certain embodiments, the score may just be summed from each derived data type value, both positive and/or negative. Finally, in numerous embodiments, the process 1200 can transmit the modified camera score (block 1290).

Although a specific embodiment for a flowchart of a process for generating a camera score suitable for carrying out the various steps, processes, methods, and operations described herein is discussed with respect to FIG. 12, any of a variety of systems and/or processes may be utilized in accordance with embodiments of the disclosure. For example, the process 1200 may be incorporated into one or more logics such that elements of the process 1200 are interchangeable with other processes, such as those depicted in the embodiments shown in FIGS. 10 and 11. The elements depicted in FIG. 12 may also be interchangeable with other elements of FIGS. 1-11 and 13-19 as required to realize a particularly desired embodiment.

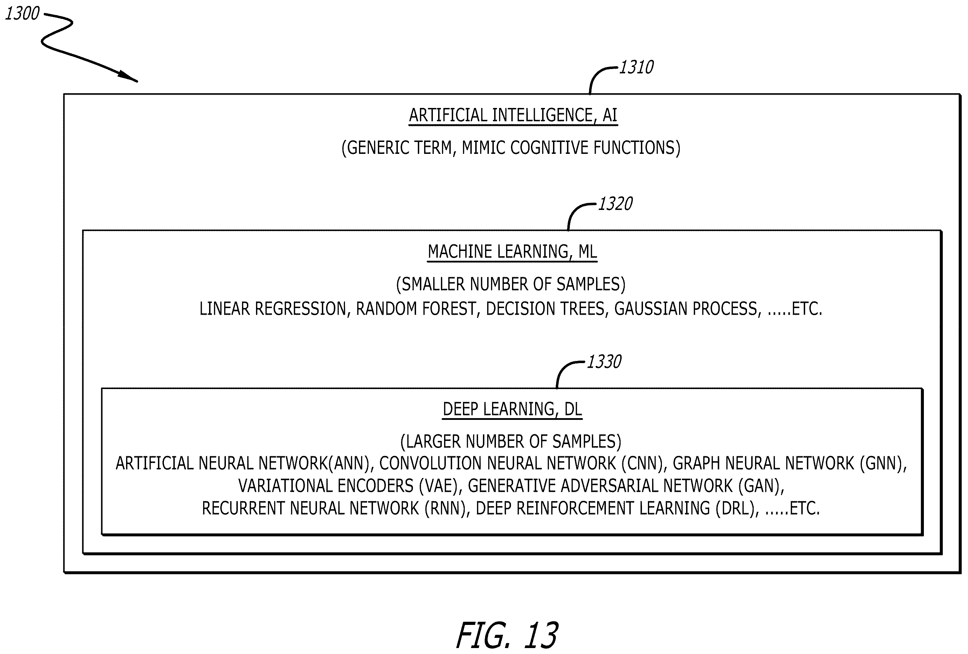

Referring to FIG. 13, a diagram 1300 depicting various subsets of artificial intelligence in accordance with various embodiments of the disclosure is shown. Artificial intelligence (AI) 1310 is typically understood in the art to be the development of machines and algorithms that mimic human intelligence, for example, by optimizing actions to achieve certain goals. At its core, AI 1310 often involves designing algorithms and models that mimic cognitive functions, such as learning, reasoning, problem-solving, perception, and even language understanding. Unlike traditional computer programs that follow a fixed set of instructions, AI systems have the ability to adapt, improve, and make decisions based on input data and environmental interactions.

AI 1310 can be considered a generic term because it encompasses a wide range of subfields and techniques, from simple rule-based systems to advanced machine learning and deep learning models. These AI techniques are used to simulate various aspects of human cognition. For example, machine learning (ML) 1320 allows computers to learn from data patterns without explicit programming for each task, while natural language processing (NLP) enables machines to understand and generate human language. Deep learning (DL) 1330, a more advanced branch of AI, uses neural networks to automatically learn complex patterns from large datasets, akin to the human brain's information processing. This versatility makes AI a powerful tool across diverse applications, including image recognition, autonomous driving, voice assistants, healthcare diagnostics, and materials discovery.

A goal of AI is often to create systems that can function autonomously and intelligently in real-world scenarios. As AI 1310 continues to evolve, it can increasingly mirror human-like cognition, enabling machines to not just process data but to "think" in a way that can handle uncertainty, make predictions, and even interact with their surroundings in a meaningful manner. While AI systems are far from achieving the full breadth of human intelligence, their ability to replicate specific cognitive functions makes them invaluable in tackling complex, data-driven challenges.

Machine Learning (ML) 1320 is a subset of Artificial Intelligence (AI) 1310 that focuses on the development of algorithms and statistical models that enable computers to learn and make decisions from data without explicit programming. In traditional programming, a computer is given a fixed set of rules to follow, but ML 1320 can shift this paradigm by allowing systems to identify patterns, adapt, and improve their performance based on the data they encounter. This data-driven approach makes ML particularly valuable for tasks that are too complex or dynamic to define using straightforward rules, such as, for example, recognizing images, predicting consumer behavior, or diagnosing diseases. In various embodiments described herein, machine-learning methods may be utilized to control the movement, direction, or other aspects about a camera system within an interactive game.

ML models can be configured to analyze large amounts of data to identify trends and relationships that inform their predictions or classifications. The process typically involves three stages: training, validation, and testing. During training, the model learns from a dataset by adjusting its internal parameters to minimize errors between its predictions and the actual results. Techniques like linear regression, decision trees, random forests, and Gaussian processes are commonly used in ML 1320. These algorithms can handle various data types, including numerical, categorical, and structured datasets like spreadsheets or grids. One of the key strengths of ML is its ability to generalize from the training data to make accurate predictions on new, unseen data. In a number of embodiments described herein, training data may be generated from historical player data, developer inputs, quality assurance/testing feedback, among other sources.

However, traditional ML methods rely heavily on feature engineering, wherein human experts manually identify the most relevant features or patterns within the data. For example, when using ML 1320 for image recognition, an expert might need to extract features like edges, textures, or color patterns before feeding them into a model. This requirement can limit the scalability of traditional ML approaches, especially when dealing with large, unstructured datasets such as images, text, or graphs. Additionally, ML algorithms may often work best when provided with relatively structured data, and they often need a reasonable amount of samples (typically more than 100) to learn effectively.

Deep Learning (DL) 1330 is a specialized subset of Machine Learning (ML) 1320 that employs multi-layered artificial neural networks to automatically learn complex patterns and representations from large, often unstructured datasets. Inspired by the way the human brain processes information, DL 1330 consists of interconnected layers of "neurons" that can adaptively change as they are exposed to more data. Unlike traditional ML methods, which require manual feature engineering to identify key data characteristics, DL models can automatically extract features directly from raw data, such as images, text, or molecular structures. This automated feature extraction allows DL 1330 to handle data types and tasks that were previously difficult or impossible for ML models to tackle effectively.

DL models, including Convolutional Neural Networks (CNNs), Graph Neural Networks (GNNs), and Recurrent Neural Networks (RNNs), excel at processing various forms of data. CNNs are particularly effective for image analysis, recognizing intricate patterns in visual inputs, making them indispensable in areas like materials science for analyzing microscopic images or detecting defects in materials. GNNs, on the other hand, are designed to work with graph-based data, such as molecular structures, social networks, or atomic interactions. They can learn the dependencies and relationships within graph-like structures, which is crucial for predicting properties of complex molecules and materials. RNNs and their variants, such as Long Short-Term Memory (LSTM) networks, are suited for sequential data like time series or natural language processing, allowing for the analysis and generation of textual information or the prediction of temporal patterns in scientific research.

One of the defining characteristics of deep learning is its requirement for large datasets (typically over 500 samples for example) to effectively train neural networks. The deep, multi-layered structure of these networks enables them to capture highly complex and abstract representations of the data, but it also demands significant computational power. Techniques like Variational Autoencoders (VAEs) and Generative Adversarial Networks (GANs) add to the versatility of DL by enabling the generation of new data samples that resemble the training set, aiding in areas such as materials discovery and synthetic data creation. Deep Reinforcement Learning (DRL) combines neural networks with decision-making processes to solve problems that involve optimization and control, further expanding DL's application potential. In summary, DL's ability to automatically learn from raw, unstructured data and model intricate patterns makes it a powerful tool in AI, particularly for complex domains like image recognition, natural language processing, and materials science.

Artificial Neural networks (ANNs or sometimes just NNs) are often a foundation of a DL system. The basic unit of a neural network is typically the perceptron, which can take inputs, assigns weights to these inputs, and combines them to produce an output. The final output is then passed through an activation function (such as, for example, ReLU, sigmoid, or hyperbolic tangent) to introduce non-linearity, which enables the network to model complex patterns.

Neural networks are typically trained through a process of backpropagation, where the system's predictions are compared against the known output, and a loss function is used to measure the difference between the prediction and the actual result. The network's weights can be adjusted through a process called gradient descent, which can be configured to minimize the loss function over time. However, the training process can be prone to problems like overfitting (where the model performs well on the training data but poorly on new data). To counter this, techniques such as regularization (e.g., regularization, dropout), early stopping, and mini-batches can be utilized to prevent the network from becoming overly specialized to the training set.

CNNs are a specific type of ML 1330 neural network designed to work particularly well with image data, making them highly relevant for as image data can be generated within an interactive game and thus be subject to processing. As those skilled in the art will recognize, CNNs typically use specialized layers known as convolutional layers, which apply filters (also known as kernels) to the input data. These filters slide over the input (e.g., an image), detecting patterns like edges or textures, which are then passed to the next layer for further processing. The advantage of CNNs is their ability to automatically learn and extract relevant features from raw data without the need for manual feature engineering. Furthermore, pooling layers (e.g., max-pooling or average pooling) are often added after convolutional layers to reduce the dimensionality of the data, helping to make the system more efficient while retaining the most important information. After several layers of convolutions and pooling, the CNN can output a prediction, such as classifying an image or generating a score suitable for evaluation for a camera cut.

While CNNs are well-suited for grid-based data like images, many real-world problems in can involve non-grid data, such as player/asset locations, cinematic rules, or player/asset interactions. This type of data may better be represented as a graph, where nodes represent entities (e.g., assets) and edges represent relationships between them (e.g., characteristics/camera value). Thus, Graph Neural Networks (GNNs) can be utilized to operate on such graph-based data.

In GNNs, information is passed between nodes through edges in a process called message passing. This allows the network to capture dependencies and relationships within the graph structure. The key feature of GNNs is their ability to aggregate information from neighboring nodes, which is crucial in predicting properties that depend on the current/local structure, such as the behavior of an asset or the properties of a camera.

Generative models aim to learn the underlying distribution of a dataset and generate new samples that resemble the original data. Two common types of generative models are Variational Autoencoders (VAEs) and Generative Adversarial Networks (GANs). VAEs are often configured to work by encoding data into a lower-dimensional latent space and then decoding it back into its original form. This allows for the generation of new data by sampling points from the latent space. This can be utilized when attempting to construct a potential camera cut score or the like.

Similarly, GANs consist of two components: a generator that creates fake/generated data and a discriminator that tries to distinguish between real and fake data. The two components are trained in a competitive process where the generator tries to "fool" the discriminator, leading to increasingly realistic generated data. This type of process may be utilized to compare camera cuts to a realistic cinematographic output.

Reinforcement Learning (RL) involves an agent learning to make decisions by interacting with an environment and receiving feedback (rewards or penalties) based on its actions. Deep Reinforcement Learning (DRL) combines RL with DL techniques, allowing agents to learn from high-dimensional inputs, such as images or complex camera simulations.

In interactive games, DRL can be used in scenarios where an optimal decision needs to be made, such as optimizing a camera cut location or finding the best configuration for a camera movement based on the desired or current properties of the camera(s). The combination of RL and DL can allow for learning from raw data, making it a powerful tool for dynamic and real-time decision-making within an interactive game.

Although a specific embodiment for a diagram 1300 depicting various subsets of artificial intelligence suitable for carrying out the various steps, processes, methods, and operations described herein is discussed with respect to FIG. 13, any of a variety of systems and/or processes may be utilized in accordance with embodiments of the disclosure. For example, other subset may be present and available for use within AI 1310. Those skilled in the art will recognize that the diagram 1300 presented in FIG. 13 is simplified for illustration purposes and various methods and techniques may interact with other areas (ML 1320 with DL 1330, etc.). The elements depicted in FIG. 13 may also be interchangeable with other elements of FIGS. 1-12 and 14-19 as required to realize a particularly desired embodiment.

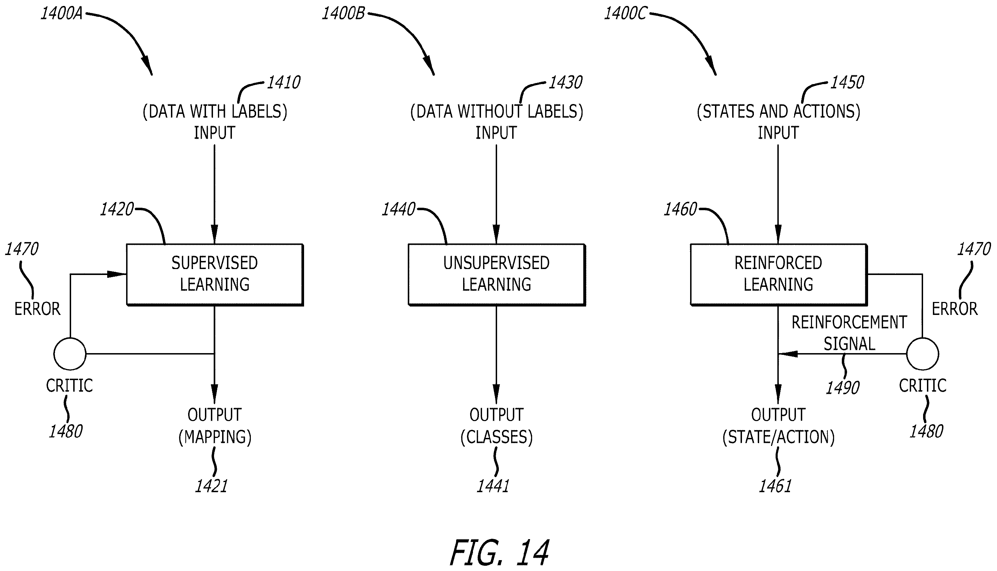

Referring to FIG. 14, different methods of machine-based learning in accordance with various embodiments of the disclosure are shown. In many embodiments, a machine learning model is defined as a mathematical representation of the output of the training process. A machine learning model is often considered similar to computer software designed to recognize patterns or behaviors based on previous experience or data. However, the learning algorithm can discover patterns within the training data, and output an ML model which can capture these patterns and make predictions on new data.

ML models can be understood as a device that has been trained to find patterns within new data and make predictions. These models can be represented as a complex mathematical function that would be impractical for a human to calculate that takes requests in the form of input data, makes predictions on input data, and then provides an output in response. First, these models can be trained over a set of data, and then they are provided an algorithm or other task to reason over data, extract the pattern from feed data and learn from that data. Once the model(s) is/are trained, they can be used to predict a new and previously unseen dataset.

There are various types of machine learning models available based on different business goals and data sets available. Often, based on the desired application, ML models can be configured as or settle into one of three different model types: supervised learning, unsupervised learning, and/or reinforcement learning. Supervised learning can further be broken down into two categories of classification and regression. Likewise, unsupervised learning can be divided into three categories: clustering, association rule, and/or dimensionality reduction.

In the embodiment depicted in FIG. 14, a supervised learning system 1400A is shown. The supervised learning system 1400A can be configured with a supervised learning model 1420 that accepts input data 1410 and generates an output 1421. However, the output data is often reviewed by a critic 1480 that can determine one or more errors 1470 that are fed back into the supervised learning model 1420 for use in updating.

Supervised learning systems 1400A are often considered the simplest machine learning model to understand in which input data (such as training data) has a known label or result as an output. So, the supervised learning model 1420 can be understood to work on the principle of input-output pairs. As such, a function can be trained using a training data set, which is then applied to unknown data and makes some predictive performance. Supervised learning is task-based and mostly tested on labeled data sets.

Supervised learning systems 1400A may often involve one or more regression problems. In regression problems, the output is a continuous variable. Some commonly used Regression models include linear regression, decision trees, and random forests. Linear regression is typically the most straight forward machine learning model in which a prediction of one output variable is made using one or more input variables. The representation of linear regression can be processed as a linear equation, which combines a set of input values (denoted as x) and a predicted output (denoted as y) for the set of those input values. As those skilled in the art will recognize, this may be represented in the form of a line: Y = bx+ c. A typical aim of a linear regression-based model can be to find the optimal fit line that best fits the available data points. Linear regression can be extended to multiple linear regressions (finding a plane of best fit in higher dimensional space) and polynomial regressions (finding the best fit curve).

Decision trees are also popular machine learning models that can be used for both regression and classification problems. A decision tree uses a tree-like structure of decisions along with their possible consequences and outcomes. In this, each internal node is used to represent a test on an attribute while each branch is used to represent the outcome of the test. The more nodes a decision tree has, the more accurate the result will be. This may be used when making decisions related to various camera cut options and the resulting score of the cut. The advantage of decision trees is that they are intuitive and easy to implement, but may lack accuracy depending on the available computational or time resources available.

Random forests are an ensemble learning method, which may consist of a large number of decision trees. For example, each decision tree in a random forest predicts an outcome, and the prediction with the majority of votes is considered as the outcome. A random forest model can be used for both regression and classification problems. For the classification task, the outcome of the random forest may be taken from the majority of votes. Whereas in the regression task, the outcome can be taken from the mean or average of the predictions generated by each tree.

Classification models are another type of supervised learning, which can be used to generate conclusions from observed values in one or more categorical forms. For example, a classification model can identify if an email is spam or not; whether a certain layout is suitable for a camera cut, etc. Classification algorithms can also be used to predict between two or more classes and/or categorize an output into different groups. For these classification systems, a classifier model can be designed that classifies the dataset into different categories, and each category can subsequently be assigned a label. As those skilled in the art will recognize, there are currently two main types of classifications in machine learning: binary and multi-class. Binary classification can be utilized when there are only two possible classes (i.e., yes/no, dog/cat, etc.). Multi-class classification can be utilized when there are more than two possible classes, thus requiring a multi-class classifier.

One of the potential classification processes is logistic regression. Logistic regression can be used to solve various classification problems in machine learning systems. These processes are similar to linear regression but are often used to predict categorical variables. While some variations can be configured to generate a prediction as an output in either "yes" or "no", 0 or 1, "true" or "false", etc. However, in some embodiments, the system can instead be configured to not give exact values, but instead provide probabilistic values between zero and one, etc.

Another classification process that can be utilized is a support vector machine (SVM) which is widely used for classification and regression tasks. However, the main aim of SVM is to find the best decision boundaries in an N-dimensional space, which can be utilized to segregate data points into classes, and generate a best decision boundary often known as a hyperplane. SVM processes can select the extreme vector to find a hyperplane, wherein these vectors are known as support vectors.

Naïve Bayes is another popular classification algorithm used in machine learning. This process receives its name as it is based on Bayes theorem and follows the naïve(independent) assumption between the features which is often given as the formula: $P \left(\left.y\right|X\right) = \frac{P \left(\left.X\right|y\right) ∗ P \left(y\right)}{P \left(X\right)}$

This formula takes a class or target y and a predictor attribute (X) and calculates a posterior probability P(y|X) of that class given a particular predictor. P(y) is the prior probability of that class, P(X) is the prior probability of the predictor, and P(X|y) is the likelihood or probability of the predictor given the class. As those skilled in the art will recognize, this may be more succinctly understood as the posterior chance being a result of the prior results times the likelihood divided by the evidence available. Each naive Bayes classifier assumes that the value of a specific variable is independent of any other variable/feature. For example, if a fruit needs to be classified based on color, shape, and taste. So yellow, oval, and sweet will be recognized as mango. Here each feature is independent of other features. Likewise, various embodiments herein can classify based on camera type, camera direction, point of interest present, etc.

Again, in the embodiment depicted in FIG. 14, an unsupervised learning system 1400B is shown. The unsupervised learning system 1400B can be configured with an unsupervised learning model 1440 that accepts input data 1430 and generates an output 1441. Unlike other model types, there are no critics or error signals to process. Unsupervised learning models 1440 can implement the learning process opposite to supervised learning, which means it enables the model to learn from an unlabeled training dataset. Based on the unlabeled dataset, the unsupervised learning model 1440 can predict the output. Using an unsupervised learning system 1400B, the unsupervised learning model 1440 can learn hidden patterns from the dataset by itself without any supervision. In various embodiments, unsupervised learning models 1440 are often utilized to perform tasks involving clustering, association rule learning, and/or dimensional reduction.

Clustering is an unsupervised learning technique that involves clustering or grouping the available data points into different clusters based on similarities and/or differences. The objects or data points with the most similarities remain in the same group, and they have no or very few similarities from other groups. Clustering algorithms can be used in a variety of different tasks such as, but not limited to image segmentation, statistical data analysis, market segmentation, and the like. Some commonly used clustering algorithms that can be selected include K-means Clustering, hierarchal Clustering, DBSCAN, etc.

Association rule learning is an unsupervised learning technique which finds unique relations among variables within a large data set. In many embodiments, a primary aim of this type of learning algorithm is to find the dependency of one data item on another data item and map those variables accordingly so that it can satisfy some desired outcome. For example, in certain embodiments, an association rule system may be utilized to generate a camera cut with a maximized overall camera score. This algorithm can be applied in market basket analysis, web usage mining, continuous production, etc. However, those skilled in the art will recognize that other scenarios may be available based on the desired application. Some popular algorithms of association rule learning are Apriori Algorithm, Eclat, and FP-growth algorithm.

In additional embodiments, the number of features/variables present in a dataset can be understood as the dimensionality of the dataset, and the technique used to reduce the dimensionality is known as a dimensionality reduction technique. Although more data provides more accurate results, it can also affect the performance of the model/algorithm, such as yielding overfitting outcomes, etc. In such cases, dimensionality reduction techniques can be utilized. It is often desired that this process involves converting the higher dimensions dataset into lesser dimensions dataset while also ensuring that the ensuing results provide similar information. Different dimensionality reduction methods can be utilized, such as, but not limited to, PCA (Principal Component Analysis), Singular Value Decomposition (SVD), etc.

Finally, in the embodiment depicted in FIG. 14, a reinforcement learning system 1400C is shown. The reinforcement learning system 1400C can be configured with a reinforcement learning model 1460 that accepts input data 1450 and generates an output 1461. In reinforcement learning, the reinforcement learning model 1460 learns actions for a given set of states that lead to a goal state. In the embodiment depicted in FIG. 14, a critic 1480 can receive or otherwise notice an error 1470 within the reinforcement learning model 1460 actions, and adjust the outcome/output such that the "reward" or "punishment" is adjusted to better model the future behaviors or processing of the reinforcement learning model 1460.

It is a feedback-based learning model that can takes feedback signals after each state or action by interacting with the environment. This feedback works as a reward (positive for each good action and negative for each bad action), and the agent's goal is to maximize the positive rewards to improve their performance. The behavior of the model in reinforcement learning is similar to human learning, as humans learn things by experiences as feedback and interact with the environment. Popular methods of reinforcement learning including q-learning, state-action-reward-state-action (SARSA), and deep Q network.

Q-learning is one of the popular model-free algorithms of reinforcement learning, which is based on the Bellman equation. It often aims to learn the policy that can help the AI agent to take the best action for maximizing the reward under a specific circumstance. It can incorporate Q values for each state-action pair that indicate the reward to following a given state path, and it tries to maximize that Q-value.

SARSA is an on-policy algorithm based on the Markov decision process. In many embodiments, it can use the action performed by the current policy to learn the Q-value. The SARSA algorithm stands for State Action Reward State Action, which symbolizes the tuple (s, a, r, s', a'). Finally, deep Q neural networking (or DQN) is Q-learning within a neural network. It can be deployed within a big state space environment where defining a Q-table would be a complex task. So, in these embodiments, rather than using a Q-table, the neural network instead utilizes Q-values for each action based on the state.

Although a specific embodiment for different methods of machine-based learning suitable for carrying out the various steps, processes, methods, and operations described herein is discussed with respect to FIG. 14, any of a variety of systems and/or processes may be utilized in accordance with embodiments of the disclosure. For example, those skilled in the art will recognize that methods of learning described herein are generalized and may incorporate other types developed as well as a combination of one or more methods based on the goals of the desired application. The elements depicted in FIG. 14 may also be interchangeable with other elements of FIGS. 1-13 and 15-19 as required to realize a particularly desired embodiment.

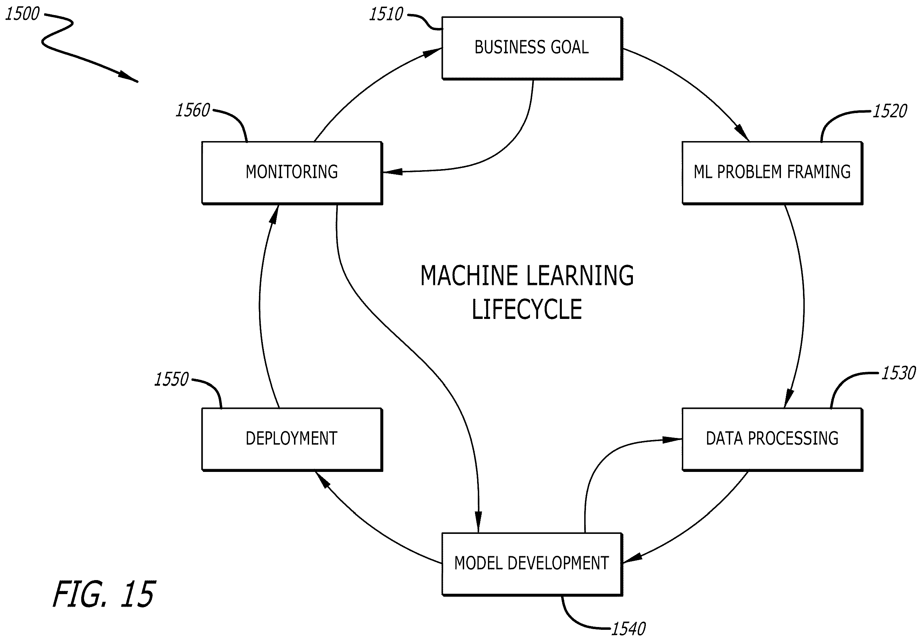

Referring to FIG. 15, a machine learning lifecycle 1500 in accordance with various embodiments of the disclosure is shown. During the development of machine learning systems, the embodiment depicted in FIG. 15 can provide a framework for how to structure the design and maintenance of these systems. This machine learning lifecycle 1500 outlines various stages involved in building, deploying, and improving ML models to solve real-world problems. By following this structured process, businesses and organizations can ensure that their machine learning projects align with strategic goals, use data effectively, and adapt to changing conditions over time. This machine learning lifecycle 1500 emphasizes that developing a machine learning model is not a one-time effort but an iterative process requiring ongoing monitoring and adjustment. The feedback loop inherent in the machine learning lifecycle 1500 allows for continual refinement and optimization of models to maintain their accuracy and relevance.

In many embodiments, a first stage of the machine learning lifecycle 1500 is identifying the business goal 1510, which sets the overall direction and purpose of the ML project. This can involve understanding the specific problems or opportunities within the business or project that machine learning can address. A clear business goal 1510 ensures that the project remains focused on delivering tangible value, whether it is improving player experiences, optimizing gametime operations, predicting camera cuts, or automating camera movements. Without a well-defined goal, it can be challenging to align the subsequent stages of the ML lifecycle 1500, as the choice of model, data processing methods, and performance metrics can all depend on what the business aims to achieve.

Establishing a proper business goal 1510 can also involve engaging with key stakeholders and developers to gather requirements and set success criteria. It can provide a roadmap that outlines what success looks like and helps in framing the ML problem. For example, if the goal is to reduce processor overhead, the project might focus on building a predictive model that identifies potential bottlenecks, allowing the game engine to intervene proactively. Clearly defined goals not only help guide the project but also provide benchmarks for evaluating the effectiveness of the deployed model once it enters production.

Once the business goal 1510 is established, various embodiments take a next step involving ML problem framing 1520, wherein the goal is translated into a specific machine learning task. This can involve selecting the appropriate type of ML problem, such as classification, regression, clustering, or recommendation, and defining the target variables or outputs. For example, if the goal is to identify processor bottlenecks, the problem can be framed as a binary classification task where the model predicts whether a certain number of assets will cause the game engine to slow down. Proper problem framing can be important as it determines the particular data requirements, choice of model, and evaluation metrics.

During this stage, it is also prudent to consider the constraints and assumptions that may affect the model's development. This might include data availability, computational resources, ethical considerations, or regulatory compliance. Properly framing the problem ensures that the model development aligns with the business's needs and that the problem is broken down into manageable steps, ultimately increasing the project's chances of success.

Data processing 1530 is a step in many embodiments where raw data is collected, cleaned, and transformed into a format suitable for machine learning. This step can involve gathering data from various sources, removing errors or inconsistencies, handling missing values, and normalizing or scaling features to ensure that the model can learn effectively. Feature engineering is often a part of this stage, where new features are derived from the raw data to capture more relevant information and improve model performance.

The quality and preparation of the utilized data can significantly impact the model's accuracy and reliability. Inadequate or poorly processed data can lead to biased or inaccurate predictions, no matter how advanced the model is. Hence, data processing 1530 can require or at least benefit from careful planning and iterative refinement. Once the data is processed, it is typically split into training, validation, and test sets to develop and evaluate the model, ensuring that it generalizes well to new, unseen data.

Model development 1540 is a phase in a number of embodiments where machine learning algorithms are selected, trained, and refined to create a model that addresses the framed problem. This stage can involve choosing the appropriate algorithm (e.g., decision trees, neural networks, support vector machines), setting up the model's architecture, and defining hyperparameters that will guide the training process. The model is trained on the processed data to identify patterns and relationships that allow it to make predictions or decisions.

During model development 1540, the model can be evaluated using the validation dataset to fine-tune its parameters and improve performance. Techniques like cross-validation, regularization, and hyperparameter tuning can be used to prevent overfitting and ensure the model generalizes well. If proper steps are taken, the result is a model that, once it meets predefined performance metrics, is ready for deployment in a real-world environment. However, this process often involves several iterations to optimize the model for the specific business goal, indicated by the arrow back to data processing 1530.

In further embodiments, deployment 1550 is the stage where the developed model is integrated into the production environment to perform its intended tasks. This phase may involve setting up the necessary infrastructure, such as APIs or cloud-based services, to allow the model(s) to process live data and generate predictions. Deployment 1550 can transform the model from a research tool into a functional component of a business process or product, providing real-time insights, automations, or decisions.

Proper deployment 1550 can also include setting up mechanisms for logging, error handling, and user access. Since real-world environments are often dynamic and differ from training conditions, deployment may require continuous adaptation and updates to ensure the model(s) operates efficiently. This step can be important because a model's success is not only determined by its performance metrics but also by its ability to provide actionable results that align with the business goal 1510.

In more embodiments, monitoring 1560 is the ongoing process of tracking the model's performance and behavior after deployment. It involves collecting data on the model's predictions, accuracy, latency, and error rates to detect issues such as concept drift, where changes in the underlying data patterns can degrade the model's accuracy. By continuously monitoring 1560, teams can identify when the model's performance drops and requires retraining or adjustments to align with the evolving data.

Monitoring 1560 can also encompass aspects like user feedback, security, and compliance, ensuring that the model remains effective, reliable, and ethical in its application. It may serve as the feedback loop in the lifecycle, where insights gained from monitoring feed back into the earlier stages, particularly data processing 1530 and model development 1540, to refine the model(s) as needed. This iterative process allows the machine learning system to adapt and maintain its alignment with the original business goal 1510 over time.

Although a specific embodiment for a machine learning lifecycle 1500 suitable for carrying out the various steps, processes, methods, and operations described herein is discussed with respect to FIG. 15, any of a variety of systems and/or processes may be utilized in accordance with embodiments of the disclosure. For example, the particular route of development of the model(s) may not follow this cycle completely. As those skilled in the art will recognize, there are a variety of ways to develop AI products that include various iterative steps that aide in development and refinement of different model(s). The elements depicted in FIG. 15 may also be interchangeable with other elements of FIGS. 1-14 and 16-19 as required to realize a particularly desired embodiment.

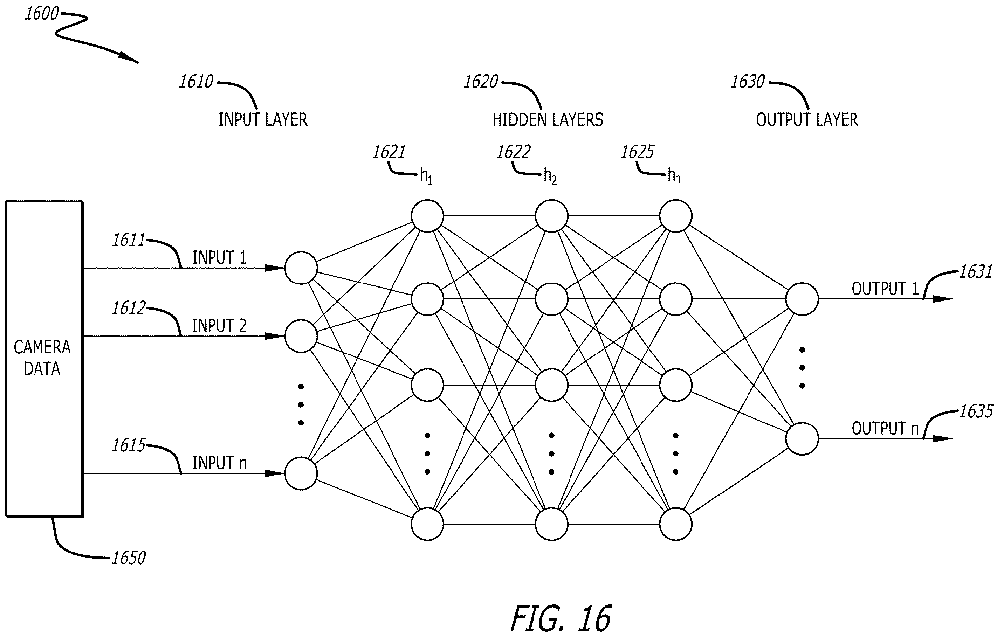

Referring to FIG. 16, an exemplary neural network 1600 for use in a fully controlled camera system in accordance with various embodiments of the disclosure is shown. The embodiment depicted specifically depicts a feedforward neural network with multiple layers. This type of network consists of an input layer 1610, one or more hidden layers 1620, and an output layer 1630. Each layer contains nodes (or neurons) that are interconnected, representing how data flows through the network. The input layer 1610 can receive raw data, which is then processed by the hidden layers 1620 through weighted connections and activation functions. These hidden layers 1620 can enable the network to learn complex patterns and relationships within the data.

The final output layer 1630 produces the network's predictions or classifications based on the processed input. The interconnected nature of the nodes allows the neural network 1600 to learn from data during training by adjusting the weights of connections to minimize prediction errors. This structure is the foundation of deep learning models, as adding more hidden layers 1620 can create a deep neural network, capable of tackling highly complex tasks such as image recognition, natural language processing, and pattern detection in large datasets.

Neural network architecture is commonly used for a wide range of tasks in fields such as computer vision, natural language processing, financial forecasting, and materials science. For instance, it can be employed to recognize patterns in images, such as identifying objects or faces, or to classify text into categories, like spam detection in emails. It is also useful in regression problems, such as predicting stock prices or energy consumption, where input features can be processed to output continuous values. However, this is a general example of an artificial intelligence (AI) model, illustrating how a feedforward neural network works. Depending on the problem, other methods and models may be more appropriate. For example, convolutional neural networks (CNNs) are often used for image processing tasks, while recurrent neural networks (RNNs) are suitable for sequential data like time series data or text. Additionally, simpler models like linear regression, decision trees, or support vector machines (SVMs) may be sufficient if the problem is less complex, or the dataset is relatively small. The embodiment depicted in FIG. 16 is presented as an exemplary ML solution that may be deployed within one or more methods or systems described herein.

In many embodiments, the input layer 1610 is the first layer in a neural network 1600 and serves as the initial point where raw data is introduced into the model. Each node (or neuron) in this layer represents an individual feature or variable from the dataset, allowing the network to receive and process various types of data, such as pixel values in an image, numerical features in a spreadsheet, or words in a text document. For instance, in image recognition tasks, the input layer can consist of nodes that correspond to the pixel values of the image, providing the network with the visual information needed to identify objects or patterns. The number of nodes in the input layer directly depends on the number of features present in the dataset. If there are one-hundred features in the data, the input layer will typically have one-hundred nodes, each conveying one piece of the information to the subsequent layers.

Unlike the hidden layers 1620 and output layers 1630, the input layer 1610 typically does not perform any computations or transformations on the data. Its primary function is often to pass the input data to the next layer in the network, the first hidden layer 1621. However, it is often desired that the data fed into this layer is preprocessed appropriately, such as being normalized or standardized, to ensure that the neural network can learn efficiently. Proper preprocessing, like scaling numerical values or encoding categorical variables, can help the network process data uniformly, facilitating more stable and faster convergence during training.

The input layer's design depends on the nature of the problem. For example, in natural language processing, the input layer may represent words encoded as numerical vectors, while in time-series analysis, each node might represent a data point in a sequence. While the input layer 1610 itself does not modify the data, it sets the stage for the neural network to extract complex patterns and relationships through the deeper layers. This flexibility in handling various types of input make the neural network 1600 a powerful tool for a diverse set of applications.

With respect to the embodiments described herein, the input layer may be configured with a plurality of inputs providing camera data 1650, camera attributes/parameters or other data sources. For example, a model can be configured with a first input 1611 configured as a first potential camera to cut to, a second input 1612 is configured with a second potential camera to cut to, while additional inputs can be added related to the number of potential cameras in the system. The nth input 1615 can be configured in certain embodiments to include the current camera such that a determination to keep the current camera in place may be possible. However, as those skilled in the art will recognize, additional setups can be configured such that the inputs can be configured to also include different parameters of the cameras, the number of assets or points of interest in the scene, the overall camera scores of previous analyses, among other input types, etc.

In a number of embodiments, the neural network 1600 comprises a plurality of hidden layers 1620. The embodiment depicted in FIG. 16 comprises a first hidden layer 1621, a second hidden layer 1622, and an nth hidden layer 1625, which are denoted as h₁, h₂, and hₙ respectively. In many embodiments, the hidden layers 1620 are where the core of the model's learning and pattern recognition occurs. In each hidden layer, individual neurons receive inputs from the previous layer, apply a set of weights, add a bias, and pass the result through an activation function (e.g., ReLU, sigmoid, or tanh). This process can introduce non-linearity, allowing the network to capture complex patterns in the data that simple linear models cannot. The intricate web of connections among neurons across layers helps the network transform and process input features into representations that become progressively more abstract and useful for making predictions.

The first hidden layer 1621 h₁ receives direct input from the input layer, transforming the raw data into an initial set of features. For example, in an image recognition task, this layer might begin identifying basic patterns, such as edges or simple textures. The output of the first hidden layer 1621 is then passed to a second hidden layer 1622 h₂, which builds upon the features identified by the first hidden layer 1621. This deeper layer might start recognizing more complex patterns, such as shapes or specific object components, by combining the lower-level features identified earlier. This can continue on until a last, nth hidden layer 1625 hₙ continues this abstraction process, allowing the network to recognize even higher-level, more detailed features, such as identifying an entire object within an image or understanding intricate relationships in the input data.

Each hidden layer adds a level of complexity and abstraction to the network's learning capabilities. The multi-layer structure can enable the network to move from recognizing simple patterns in the first input layer 1621 to highly complex, abstract concepts in the deeper layers. The number of hidden layers and neurons within them can vary depending on the problem's complexity. More hidden layers generally allow the network to model more intricate functions, making deep neural networks especially effective for tasks like image recognition, natural language processing, and complex predictive modeling. However, adding more layers also increases the computational demand and the risk of overfitting, highlighting the need to carefully design and tune these hidden layers for optimal performance.

In various embodiments, the output layer 1630 is often the final layer in a neural network and is responsible for producing the network's predictions or classifications based on the information processed through the previous hidden layers 1620. Each neuron in the output layer 1630 can represent a specific outcome or category that the model can predict. In the embodiment depicted in FIG. 16, the outputs are labeled as "output 1" to "output n," indicating that the network can be designed to have a varying number of outputs depending on the nature of the problem being solved for. For example, in a binary classification task (e.g., cutting the camera vs. not cutting the camera), there would typically be a single output neuron that provides a probability score for one of the two classes/outcomes. In contrast, for multi-class classification (e.g., categorizing a best suited camera cut between three or more potential cameras and/camera angles), the output layer would contain multiple neurons, each corresponding to a different class.

The number of neurons in the output layer 1630 can also designed specifically for other types of tasks, such as regression, where the model can predict continuous values. In such cases, the output layer 1630 might contain a single neuron representing a numerical prediction, such as the price of a house or the temperature forecast, etc. Alternatively, in complex applications like multi-label classification (where each input can belong to multiple classes simultaneously), the output layer 1630 could have multiple neurons, each representing a different class, with each neuron outputting a probability of the input belonging to that specific class.

The activation function used in the output layer can vary based on the desired output. For binary classification, a sigmoid function is commonly used to produce a probability between 0 and 1. For multi-class classifications, a SoftMax function can be applied to output a set of probabilities that sum to 1, indicating the most likely class. For regression problems, a linear activation function is often used to output a continuous range of values. The flexibility in designing the output layer allows the neural network 1600 to be applied to a wide variety of tasks, from simple binary decisions to complex multi-output predictions, making them a versatile tool in artificial intelligence and machine learning.

Although a specific embodiment for an exemplary neural network for use in a fully controlled camera system suitable for carrying out the various steps, processes, methods, and operations described herein is discussed with respect to FIG. 16, any of a variety of systems and/or processes may be utilized in accordance with embodiments of the disclosure. For example, real-world neural networks are often far more complex, featuring many more layers, nodes, and connections than the simplified structure shown in the embodiment depicted in FIG. 16, which is an illustrative example meant to make it easier to explain the basic concepts of neural networks and how they process information. The specific features and functions described herein are not intended to be limiting to this specific embodiment. Additionally, the elements depicted in FIG. 16 may also be interchangeable with other elements of FIGS. 1-15 and 17-19 as required to realize a particularly desired embodiment.

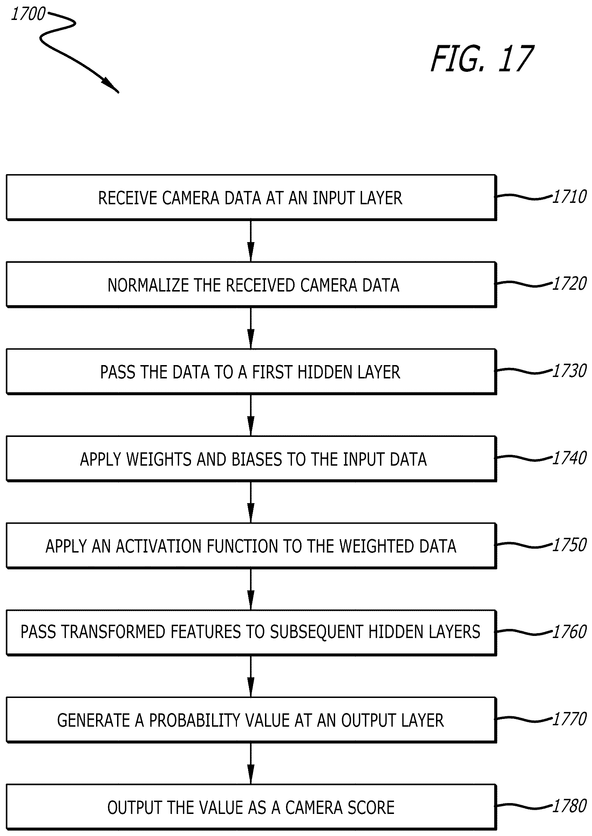

Referring to FIG. 17, a flowchart depicting a process 1700 for machine-learning based camera scoring in accordance with various embodiments of the disclosure is shown. In many embodiments, the process 1700 can receive camera data at an input layer (block 1710). This input layer serves as the entry point for raw information into the neural network architecture, accepting values that represent various attributes of the virtual environment and camera. In some embodiments, the camera data may be received directly from a game engine in real-time as a stream of numerical values representing position and orientation. Alternatively, the camera data might be retrieved from a temporary storage buffer where frame data is aggregated before processing. In a non-limiting example, the input layer may be configured to accept a feature vector containing values for lens focal length, subject distance, and occlusion percentage.

In further embodiments, the process 1700 can normalize the received camera data (block 1720). Normalization ensures that the different input features are on a similar scale, which facilitates faster and more stable convergence during the processing of the neural network. In certain embodiments, this step involves scaling all numerical inputs to a range between zero and one using min-max scaling techniques. Alternatively, the process 1700 may utilize z-score standardization to transform data points based on a mean and standard deviation of a training dataset. For instance, a camera distance value measured in virtual meters might be scaled down to a decimal value to match the scale of an occlusion flag value.

In additional embodiments, the process 1700 can pass the data to a first hidden layer (block 1730). This transmission moves the pre-processed information from the input structure into the computational core of the model where feature extraction begins. In some embodiments, the data is passed to a fully connected dense layer where every input node connects to every neuron in the first hidden layer. Alternatively, if the data represents spatial grid information, the process 1700 might pass the data to a convolutional layer designed to detect spatial hierarchies. It is contemplated that this step may also involve dividing the input vector into segments if multiple parallel hidden layers are utilized for different data types.

In still more embodiments, the process 1700 can apply weights and biases to the input data (block 1740). Each connection between the neurons is associated with a specific weight value that determines the importance of the input, while a bias value is added to shift the activation function. In certain embodiments, these weights are applied via matrix multiplication operations performed on a graphics processing unit to handle high-dimensional data efficiently. Alternatively, the application of weights and biases may occur sequentially on a central processing unit for less complex network architectures. The specific values for these weights and biases are typically derived from a prior training phase and are loaded into memory during the initialization of the model.

In yet further embodiments, the process 1700 can apply an activation function to the weighted data (block 1750). This mathematical operation introduces non-linearity into the network, allowing the model to learn complex boundaries and relationships that simple linear combinations cannot capture. In some embodiments, the process 1700 utilizes a Rectified Linear Unit (ReLU) function, which outputs the input directly if it is positive and zero otherwise. Alternatively, a sigmoid or hyperbolic tangent function may be applied to squash the output values into a specific limited range. For example, a sigmoid function might be chosen if the specific layer requires a smoother gradient transition for specific feature detection tasks.

In numerous embodiments, the process 1700 can pass transformed features to subsequent hidden layers (block 1760). This step allows the network to build higher-level abstractions from the initial features detected by the previous layers, creating a deep learning architecture. In certain embodiments, the transformed features are passed sequentially through a deep stack of identical layers to refine the data representation. Alternatively, the features may be passed through skip connections or residual blocks that allow information to bypass certain intermediate layers to prevent the vanishing gradient problem. The number of subsequent hidden layers utilized may vary dynamically based on the complexity of the current game scene being analyzed.

In some embodiments, the process 1700 can generate a probability value at an output layer (block 1770). The output layer aggregates the high-level features processed by the hidden layers to produce a final numerical prediction regarding the suitability of the camera configuration. In many embodiments, a SoftMax function is applied at this stage to generate a probability distribution across multiple potential classes or camera states. Alternatively, a single neuron with a linear or sigmoid activation might be used to output a continuous regression value representing the probability or quality score. For instance, the output might be a decimal value between zero and one indicating the likelihood that the current camera angle will provide an unobstructed view of the player.

In various embodiments, the process 1700 can output the value as a camera score (block 1780). This final score is then made available to other logic components within the fully controlled camera system to determine if a camera cut is necessary or if the current view should be maintained. In some embodiments, the camera score is transmitted via an internal message bus to a virtual editor logic that compares it against a threshold. Alternatively, the camera score may be stored in a shared memory location where it can be polled by a camera selection service. The outputted camera score effectively translates the complex neural network processing into a single, actionable metric for the game engine.

Although a specific embodiment for a process 1700 for machine-learning based camera scoring suitable for carrying out the various steps, processes, methods, and operations described herein is discussed with respect to FIG. 17, any of a variety of systems and/or processes may be utilized in accordance with embodiments of the disclosure. For example, the specific order of layers or the types of normalization used could be substituted with other standard machine learning techniques known in the art. The elements depicted in FIG. 17 may also be interchangeable with other elements of FIGS. 1-16 and 18-19 as required to realize a particularly desired embodiment.

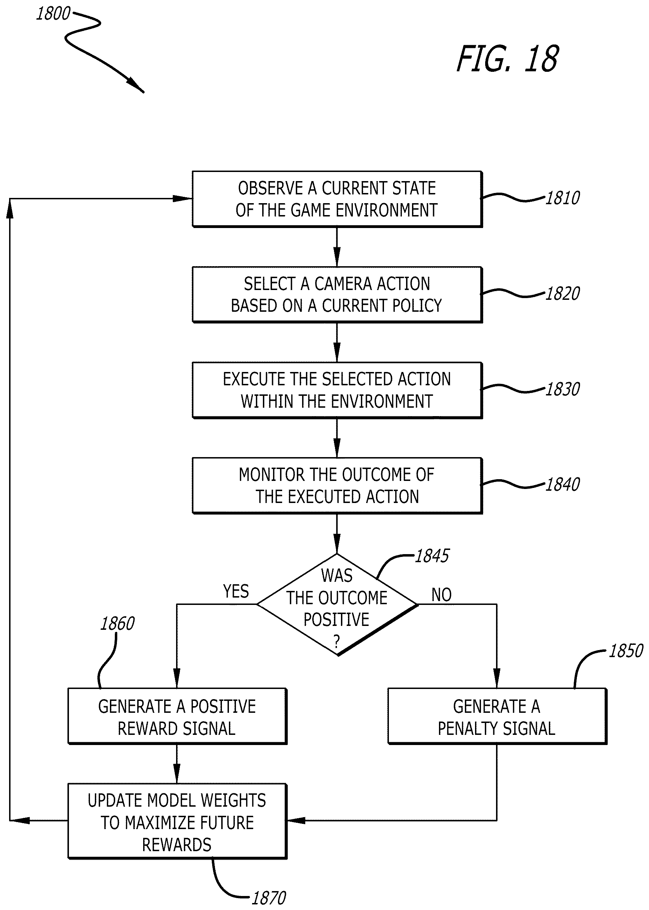

Referring to FIG. 18, a flowchart depicting a process 1800 for a reinforcement learning feedback loop in accordance with various embodiments of the disclosure is shown. In many embodiments, the process 1800 can observe a current state of the game environment (block 1810). This observation step involves gathering data regarding the precise context of the gameplay at a specific moment in time. In some embodiments, the process 1800 polls the game engine to retrieve a snapshot of variables such as player coordinates, enemy positions, and current camera orientation. Alternatively, the observation may be event-driven, where the system receives a state vector pushed by the game logic whenever a significant change occurs in the environment. For example, the observed state might include data indicating that the player character is cornered by two enemies in a narrow corridor.

In further embodiments, the process 1800 can select a camera action based on a current policy (block 1820). The current policy acts as the decision-making strategy for the reinforcement learning agent, mapping the observed state to the most statistically advantageous action. In certain embodiments, this selection involves querying a Q-table where state-action pairs are stored with associated utility values. Alternatively, the selection might involve a forward pass through a deep neural network that outputs a recommended action based on learned features. In a non-limiting example, the policy might determine that cutting to a high-angle camera is the action with the highest expected reward for the current combat state.

In additional embodiments, the process 1800 can execute the selected action within the environment (block 1830). Once the decision is made, the system interfaces with the rendering engine to physically implement the change in perspective. In some embodiments, this execution results in an immediate hard cut to the new camera point selected by the policy. Alternatively, the executed action might be a continuous movement command, such as panning or zooming the existing camera to a new framing. For instance, the system might instantly switch the viewport to a ceiling-mounted camera to provide a better view of the tactical layout.

In still more embodiments, the process 1800 can monitor the outcome of the executed action (block 1840). This monitoring phase is critical for evaluating the success of the chosen camera strategy in the live environment. In certain embodiments, the process 1800 tracks player inputs immediately following the camera change to detect signs of confusion or dissatisfaction. Alternatively, the system might monitor gameplay metrics such as damage taken or accuracy to see if the new view hindered the player's performance. It is contemplated that the system may simply measure the duration the camera remains active before the player manually overrides it.

In yet further embodiments, the process 1800 can determine if the outcome was positive (block 1845). If it is determined that the outcome was positive, then the process 1800 can generate a positive reward signal (block 1860). This positive determination implies that the selected camera angle aided the player or was aesthetically pleasing enough to be retained without manual correction. However, if it is determined that the outcome was not positive, then the process 1800 can generate a penalty signal (block 1850). This negative determination might occur if the player immediately rotated the camera away from the selected angle or if the player character walked into an obstacle that was obscured by the new view.

In some embodiments, the process 1800 can generate a penalty signal (block 1850). This signal serves as a mathematical indication to the learning model that the action taken was sub-optimal for the given state. In various embodiments, the penalty signal is a negative numerical value that is fed back into the loss function of the model. Alternatively, the penalty might be a zero reward in a sparse reward environment, indicating a failure to achieve a desired goal. For example, a value of negative one might be assigned to the specific state-action pair to discourage the model from repeating that specific camera cut in similar future situations.

In various embodiments, the process 1800 can generate a positive reward signal (block 1860). This signal reinforces the behavior that led to the successful camera choice. In some embodiments, the positive reward signal is a high numerical value that increases the cumulative expected return for the policy. Alternatively, the reward might be scaled based on the degree of success, such as a higher reward for a long period of uninterrupted gameplay versus a shorter one. For instance, the system might assign a positive value if the player successfully defeats an enemy while the selected camera angle is active.

In numerous embodiments, the process 1800 can update model weights to maximize future rewards (block 1870). This step closes the learning loop by modifying the internal parameters of the model based on the generated reward or penalty. In certain embodiments, this involves a backpropagation process where the error between the expected reward and the actual reward is used to adjust the weights of a neural network. Alternatively, the process 1800 might update a specific entry in a Q-table using the Bellman equation to refine the value estimate for the state-action pair. After updating the model weights, the process 1800 typically loops back to observe a current state of the game environment (block 1810) to continue the learning cycle indefinitely.

Although a specific embodiment for a process 1800 for a reinforcement learning feedback loop suitable for carrying out the various steps, processes, methods, and operations described herein is discussed with respect to FIG. 18, any of a variety of systems and/or processes may be utilized in accordance with embodiments of the disclosure. For example, the specific definitions of positive and negative outcomes could be customized by the player or developer to prioritize different aesthetic styles. The elements depicted in FIG. 18 may also be interchangeable with other elements of FIGS. 1-17 and 19 as required to realize a particularly desired embodiment.

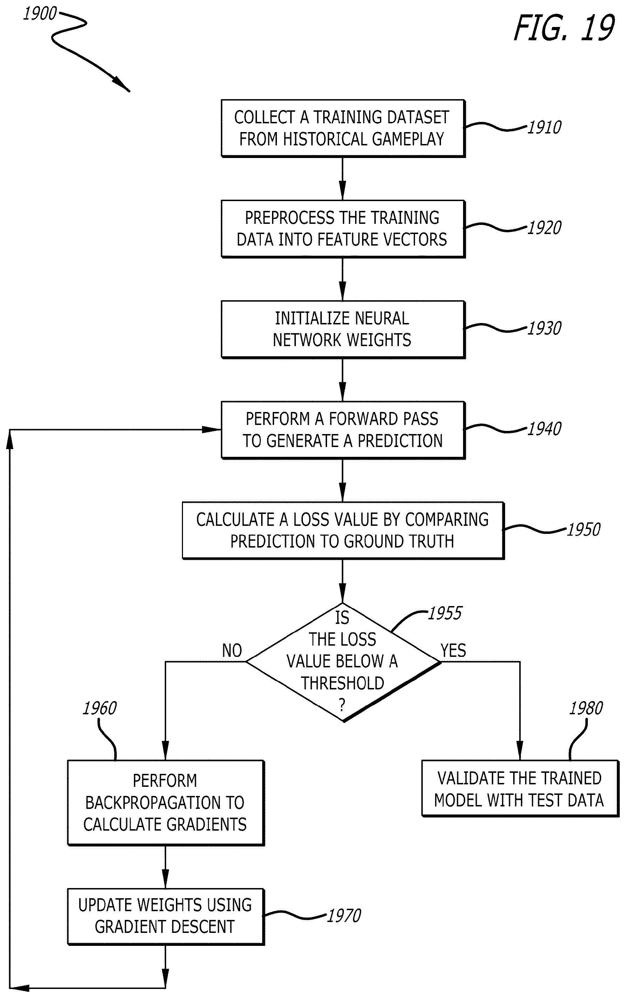

Referring to FIG. 19, a flowchart depicting a process 1900 for training a deep learning camera model in accordance with various embodiments of the disclosure is shown. In many embodiments, the process 1900 can collect a training dataset from historical gameplay (block 1910). This collection may involve aggregating large volumes of telemetry logs from beta testers where manual camera adjustments were explicitly recorded. In some embodiments, the dataset is generated synthetically by a scripting engine that simulates perfect camera behavior based on hard-coded cinematographic rules. Alternatively, the dataset might be sourced from recorded professional gameplay sessions to capture high-level human intuition regarding framing and pacing. It is contemplated that the dataset may also include negative examples, where poor camera angles were manually rejected or corrected by players, to teach the model what to avoid.

In further embodiments, the process 1900 can preprocess the training data into feature vectors (block 1920). This preprocessing often converts raw game state variables, such as three-dimensional coordinates and object tags, into a standardized numerical format suitable for ingestion by a neural network. In certain embodiments, this step involves normalizing spatial data relative to the player character's position to ensure the model learns relative rather than absolute positioning. Alternatively, the preprocessing might include dimensionality reduction techniques, such as Principal Component Analysis, to reduce the computational load by identifying the most impactful features before training begins. In a non-limiting example, categorical data such as weapon type might be converted into one-hot encoded vectors during this stage.

In additional embodiments, the process 1900 can initialize neural network weights (block 1930). This initialization sets the starting parameters for the connections between neurons, often using random values drawn from a specific distribution like a Gaussian distribution. In some embodiments, the weights can be initialized using Xavier or He initialization techniques to maintain consistent variance across layers and prevent vanishing or exploding gradients. Alternatively, the process 1900 might load pre-trained weights from a different but related model, effectively utilizing transfer learning to accelerate the convergence of the new camera control model. This step establishes the baseline state of the model before any learning has occurred.

In still more embodiments, the process 1900 can perform a forward pass to generate a prediction (block 1940). During this step, input data propagates through the various hidden layers of the network, undergoing matrix multiplications and activation functions to produce an output. In certain embodiments, this prediction is a classification of the best camera angle among a discrete set of predefined options available in the scene. Alternatively, the prediction might be a continuous regression value representing the optimal coordinate offset for the camera relative to the player character. The forward pass represents the model's current best guess based on its existing weight configuration.

In yet further embodiments, the process 1900 can calculate a loss value by comparing prediction to ground truth (block 1950). The loss value quantifies the error or divergence between the model's predicted camera action and the actual optimal action recorded in the training dataset. In some embodiments, this calculation utilizes a Mean Squared Error function, which is particularly effective for regression problems where the output is a coordinate or score. Alternatively, a Cross-Entropy Loss function may be employed if the model is treating camera selection as a categorical classification task. This value serves as the primary metric for how well the model is currently performing.

In various embodiments, the process 1900 can determine if the loss value is below a threshold (block 1955). If the loss value is not below the threshold, then the process 1900 can perform backpropagation to calculate gradients (block 1960). However, if the loss value is below the threshold, then the process 1900 can validate the trained model with test data (block 1980). In some embodiments, this threshold determination effectively decides whether the model has converged sufficiently or if further training iterations are required. Alternatively, instead of a fixed value threshold, the determination might check if the loss value has stopped decreasing over a set number of epochs, indicating a plateau in learning.

In numerous embodiments, the process 1900 can perform backpropagation to calculate gradients (block 1960). This computational step involves traversing the network in reverse, from the output layer to the input layer, to determine the gradient of the loss function with respect to each weight. In certain embodiments, the gradients are calculated using the chain rule of calculus to attribute a portion of the total error to each specific neuron connection. Alternatively, automated differentiation libraries may be utilized to compute these gradients efficiently without manual implementation of the calculus operations. This step identifies the direction in which the weights must be adjusted to reduce the error.

In some embodiments, the process 1900 can update weights using gradient descent (block 1970). This step modifies the internal parameters of the neural network by subtracting a portion of the calculated gradient from the current weights to minimize the loss. In various embodiments, a stochastic gradient descent optimizer is used, which updates weights based on a single training example or a small batch to escape local minima. Alternatively, adaptive learning rate algorithms like Adam or RMSprop may be employed to adjust the step size dynamically for each parameter, ensuring faster convergence. After updating the weights, the process 1900 typically returns to performing a forward pass to generate a prediction (block 1940) to test the new configuration.

In additional embodiments, the process 1900 can validate the trained model with test data (block 1980). Validation involves running the model against a separate dataset that was not used during the training phase to ensure the model generalizes well to new situations. In some embodiments, this validation checks for overfitting, where the model performs well on training data but fails to accurately predict camera angles for unseen gameplay scenarios. Alternatively, the validation step might involve a k-fold cross-validation process where the data is split into multiple subsets to robustly assess the model's performance stability. This final check ensures the model is ready for deployment in a live game environment.

Although a specific embodiment for a process 1900 for training a deep learning camera model suitable for carrying out the various steps, processes, methods, and operations described herein is discussed with respect to FIG. 19, any of a variety of systems and/or processes may be utilized in accordance with embodiments of the disclosure. For example, the collection of data and the training phases might occur on separate server clusters rather than on the local device. The elements depicted in FIG. 19 may also be interchangeable with other elements of FIGS. 1-18 as required to realize a particularly desired embodiment.

Although the present disclosure has been described in certain specific aspects, many additional modifications and variations would be apparent to those skilled in the art. In particular, any of the various processes described above can be performed in alternative sequences and/or in parallel (on the same or on different computing devices) in order to achieve similar results in a manner that is more appropriate to the requirements of a specific application. It is therefore to be understood that the present disclosure can be practiced other than specifically described without departing from the scope and spirit of the present disclosure. Thus, embodiments of the present disclosure should be considered in all respects as illustrative and not restrictive. It will be evident to the person skilled in the art to freely combine several or all of the embodiments discussed here as deemed suitable for a specific application of the disclosure. Throughout this disclosure, terms like "advantageous", "exemplary" or "example" indicate elements or dimensions which are particularly suitable (but not essential) to the disclosure or an embodiment thereof and may be modified wherever deemed suitable by the skilled person, except where expressly required. Accordingly, the scope of the disclosure should be determined not by the embodiments illustrated, but by the appended claims and their equivalents.

Any reference to an element being made in the singular is not intended to mean "one and only one" unless explicitly so stated, but rather "one or more." All structural and functional equivalents to the elements of the above-described preferred embodiment and additional embodiments as regarded by those of ordinary skill in the art are hereby expressly incorporated by reference and are intended to be encompassed by the present claims.

Moreover, no requirement exists for a system or method to address each and every problem sought to be resolved by the present disclosure, for solutions to such problems to be encompassed by the present claims. Furthermore, no element, component, or method step in the present disclosure is intended to be dedicated to the public regardless of whether the element, component, or method step is explicitly recited in the claims. Various changes and modifications in form, material, workpiece, and fabrication material detail can be made, without departing from the spirit and scope of the present disclosure, as set forth in the appended claims, as might be apparent to those of ordinary skill in the art, are also encompassed by the present disclosure.

## Claims

1. A device, comprising:
a processor; and
a memory communicatively coupled to the processor, wherein the memory comprises a camera scoring logic that is configured to:
receive camera data;
generate normalized data based on the camera data;
pass the normalized data to at least one hidden layer;
generate weighted data;
apply an activation function to the weighted data to generate transformed features;
generate a probability value based on the transformed features; and
output the probability value as a camera score.

2. The device of claim 1, wherein the camera data is received at an input layer.

3. The device of claim 1, wherein the weighted data is generated by applying a set of weights.

4. The device of claim 3, wherein the weighted data is further generated by applying a set of biases.

5. The device of claim 1, wherein the probability value is generated at an output layer.

6. The device of claim 1, wherein the camera scoring logic is further configured to pass the transformed features to at least one subsequent hidden layer.

7. The device of claim 1, wherein the normalized data is generated by scaling a set of numerical values within the camera data to a uniform range.

8. The device of claim 1, wherein the camera scoring logic is further configured to:
compare the camera score against a current camera score associated with a currently active virtual camera; and
execute a camera cut command to a camera point associated with the camera score if the camera score exceeds the current camera score.

9. The device of claim 1, wherein the camera data comprises at least one of: a lens data, a movement data, a framing data, a camera type data, or a camera weight data.

10. The device of claim 1, wherein the activation function comprises one of: a Rectified Linear Unit (ReLU) function, a sigmoid function, or a hyperbolic tangent function.

11. The device of claim 1, wherein the camera scoring logic is further configured to:
calculate a loss value by comparing the probability value to a ground truth; and
adjust a set of weights associated with the at least one hidden layer via a backpropagation process to minimize the loss value.

12. A camera processing system, comprising:
a processor; and
a memory communicatively coupled to the processor, wherein the memory comprises a camera scoring logic that is configured to:
instantiate an input layer;
instantiate a plurality of hidden layers communicatively coupled to the input layer;
process a set of camera data through the plurality of hidden layers to generate a set of transformed features;
calculate a probability value based on the set of transformed features; and
provide the probability value as a camera score.

13. The camera processing system of claim 12, wherein the input layer is configured to receive the set of camera data.

14. The camera processing system of claim 12, wherein the set of camera data is processed through the plurality of hidden layers at least by applying a set of weights.

15. The camera processing system of claim 12, wherein the set of camera data is processed through the plurality of hidden layers at least by applying a set of biases.

16. The camera processing system of claim 12, wherein the set of camera data is processed through the plurality of hidden layers at least by applying one or more activation functions.

17. The camera processing system of claim 12, wherein the probability value is calculated at an output layer.

18. The camera processing system of claim 12, wherein the camera score is configured to be utilized within a fully controlled camera system.

19. A method of machine-learning based camera scoring, comprising:
receiving, by a computing device, camera data;
generating, by the computing device, normalized data based on the camera data;
passing, by the computing device, the normalized data to at least one hidden layer;
generating, by the computing device, weighted data;
applying, by the computing device, an activation function to the weighted data to generate transformed features;
generating, by the computing device, a probability value based on the transformed features; and
outputting, by the computing device, the probability value as a camera score.

20. The method of claim 19, further comprising:
comparing the camera score against a current camera score associated with an active virtual camera; and
triggering a camera cut to a camera point associated with the camera data if the camera score exceeds the current camera score.
